# EUROPEAN PATENT SPECIFICATION

(11) **EP 3 085 910 B1**
(45) Date of publication and mention of the grant of the patent: **15.08.2018**
(21) Application number: 14871423.1
(22) Date of filing: 29.10.2014
(51) Int. Cl.: F01N 3/04, B01D 53/18, B01D 53/50, B01D 53/77, B01D 53/14, B01D 53/78, F02B 37/00, F02M 26/32, F01N 3/01, F01N 3/02, F01N 3/037

(54) **EXHAUST GAS PURIFICATION DEVICE FOR MARINE DIESEL ENGINE THAT USES LOW-QUALITY FUEL SUCH AS HEAVY OIL CONTAINING HIGH CONCENTRATION OF SULFUR COMPONENT**
ABGASREINIGUNGSVORRICHTUNG FÜR EINEN SCHIFFSDIESELMOTOR MIT MINDERWERTIGEM BRENNSTOFF WIE BRENNSTOFFÖL MIT HOHEM SCHWEFELGEHALT
DISPOSITIF D'ÉPURATION DE GAZ D'ÉCHAPPEMENT POUR MOTEUR DIESEL MARIN UTILISANT UN CARBURANT DE BASSE QUALITÉ COMME LE PÉTROLE CONTENANT UNE CONCENTRATION ÉLEVÉE DE SOUFRE

(30) Priority: 17.12.2013 JP 2013260696
(43) Date of publication of application: 26.10.2016
(73) Proprietor: Usui Kokusai Sangyo Kaisha Ltd., Shizuoka 411-8610 (JP)
(72) Inventor: FURUGEN, Munekatsu, Nishinomiya-shi Hyogo 662-0875 (JP); MAKINO, Tadashi, Takatsuki-shi Osaka 569-1020 (JP); TAKAHASHI, Teruhisa, Sunto-gun Shizuoka 411-8610 (JP); TAKIKAWA, Kazunori, Shizuoka 4100037 (JP)
(74) Representative: Hoppe, Lars
(86) International application number: PCT/JP2014/079383
(87) International publication number: WO 2015/093172

(56) References cited:
- EP-A1- 2 639 440
- WO-A1-02/068809
- WO-A1-2013/045272
- CA-A1- 2 753 662
- JP-A- 2000 167 340
- JP-A- 2003 126 690
- JP-A- 2009 050 751
- JP-A- 2011 523 993
- JP-A- 2012 140 928
- JP-U- S5 176 541

## Description

### Technical Field

The present invention relates to an exhaust gas treatment technique for a large-displacement marine diesel engine using low-quality fuel such as fuel oil particularly containing high-concentration sulfur components [while fuel oil is represented as Diesel Oil (DO), Marine Diesel Fuel (MDF) or Marine Diesel Oil (MDO), Marine Fuel Oil (MFO), Heavy Fuel Oil (HFO), and Residual Fuel Oil (RFO) in ship industries, these representations are hereinafter collectively referred to as fuel oil in the present invention] for marine, electric power generation, industries, and so forth, the treatment for removing harmful gas, such as sulfur oxides, contained in exhaust gas of a marine diesel engine for purification. In particular, the present invention relates to an exhaust gas purification equipment in a large-displacement marine diesel engine which discharges high-temperature exhaust gas, where a scrubber using a difference in diffusion speed between gas and particles is disposed.

### Background Art

As a motive power source for various marines, electric power generators, large construction machines and, furthermore, various automobiles, and so forth, diesel engines have been widely adopted. Particular matter (hereinafter referred to as "PM") mainly including carbon, sulfur oxides (hereinafter referred to as "SOx") and nitrogen oxides (hereinafter referred to as "NOx" contained in exhaust gas discharged from the diesel engines not only cause air pollution as well known but also are substances extremely hazardous to human bodies. Therefore, purification of the exhaust gas is extremely important. Thus, many suggestions have already been made, such as an improvement of a diesel engine combustion scheme, adoption of various exhaust gas filters, an exhaust gas recirculation (hereinafter referred to as "EGR") method, the selective catalytic reduction (hereinafter referred to as "SCR") process, and an electrical treatment method using corona discharge, and some of such suggestions have been partially put to practical use.

Here, PM (particular matter) components in exhaust gas of a diesel engine are classified into two, that is, soluble organic fractions (hereinafter referred to as "SOF") and insoluble organic fractions (hereinafter referred to as "ISF"). Of these, the SOF components have unburned ones of fuel and lubricant oil as main components, including harmful substances such as carcinogenetic polycyclic aromatics. On the other hand, the ISF components have low-electrical-resistivity carbon (soot) and sulfate components as main components. Due to influences of these SOF components and ISF components on human bodies and environments, exhaust gas is desired to be reduced as much as possible. In particular, the degree of adverse effects of PM on living bodies are particularly problematic when the particle diameter is of a nanometer size.

As the electrical treatment method using corona discharge, for example, a method and device described below (Patent Literatures 1 and 2) have been suggested.

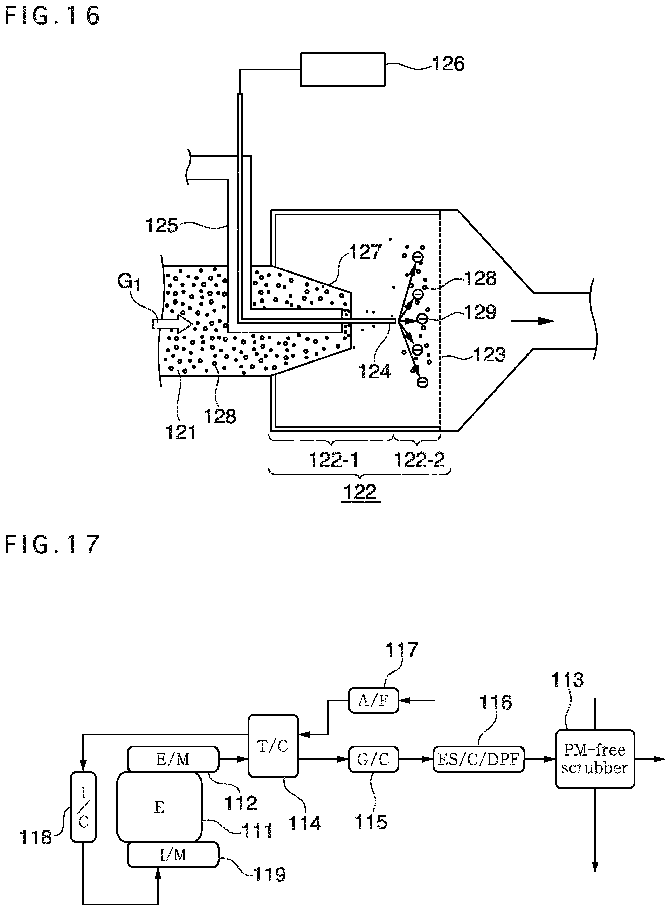

In Patent Literature 1, as schematically described in Figure 16, the Applicant has suggested an electrical treatment method and equipment for exhaust gas of a diesel engine, wherein a discharging/charging unit 122 formed of a corona discharging unit 122-1 and a charging unit 122-2 is provided with an exhaust gas passage 121 to charge PM 128 in exhaust gas G1 having carbon as a main component with corona-discharged electrons 129, and the charged PM 128 is collected by a collection plate 123 disposed in the exhaust gas passage 121, the method and equipment having the configuration is such that an electrode needle 124 in the discharging/charging unit 122 has a short length in a flowing direction of an exhaust gas flow, and the collection plate 123 is disposed in a direction perpendicular to the flowing direction of the exhaust gas flow. In Figure 16, the reference numeral 125 denotes a seal gas pipe, 126 denotes a high-voltage power supply device, and 127 denotes an exhaust gas induction pipe.

Also, in the first example of Patent Literature 2, as schematically described in Figure 17, the Applicant has suggested an exhaust gas purification equipment for a marine diesel engine configured to have an exhaust gas cooler (G/C) 115 disposed downstream of a turbine (not depicted) of a turbocharger (T/C) 114 of an exhaust pipe downstream from an exhaust manifold (E/M) 112 of a diesel engine (E) 111 using low-quality fuel such as fuel oil containing high-concentration sulfur components as fuel, an electrostatic cyclone exhaust gas purification equipment (ES/C/DPF (Diesel Particulate Filter)) 116 further disposed downstream from the exhaust gas cooler (G/C) 115, and a scrubber (hereinafter referred to as a "PM-free scrubber") 113 which dissolves SOx in the exhaust gas into its treatment water but hardly dissolves or removes PM into or from treatment water disposed to a downstream-side piping to cause outside air to be taken to an intake pipe downstream from an air filter (A/F) 117 via a compressor (not depicted) of the turbocharger (T/C) 114 and an intercooler (I/C) 118 to an intake manifold (I/M) 119 of the engine.

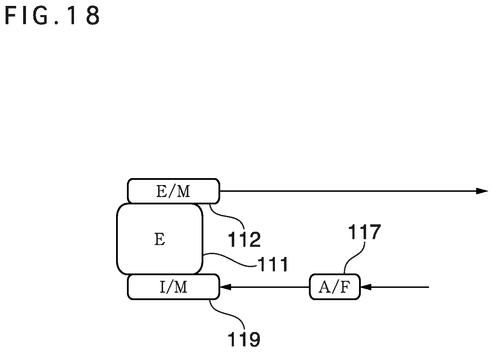

Note that, in some cases, exhaust gas is discharged without being treated at all, as depicted in Fig. 18.

Also, as equipment which removes SOx in exhaust gas discharged from a power generation facility, a chemical product manufacturing plant, metal treatment plant, sintering plant, paper manufacturing plant, or the like including a boiler using fuel such as coal or fuel oil; a gas turbine, engine, incinerator, or the like, a smoke-exhaust treatment device (Patent Literature 3) has been suggested in which an activated carbon fiber layer is provided in a catalyst tank, the layer having many passages as relatively small linear spaces formed by alternately multi-layering flat-plate activated carbon fiber sheets in a flat-plate shape and wave-plate activated carbon fiber sheets in a wave-plate shape with continuous waves in a V shape, water is dripped from water supply means on an upper portion of the catalyst tank, and exhaust gas is let pass through the passages between the sheets to remove sulfur components as sulfuric acid.

On the other hand, Non-Patent Literature 1 defines, in Chapter 3 "Requirements for machinery spaces of all ships", Part C "Control of discharge of oil", Regulation 15 "Control of discharge of oil", oil concentrations of the oily mixture without dilution outside and in special areas.

Also, a Non-Patent Literature 2 suggests a technique of equipping a container ship with a diesel engine in which EGR gas branching from an exhaust pipe to a turbine of a turbocharger is purified by a scrubber and cooled by an EGR cooler, and further caused to pass through a droplets collector, and then recirculated by an EGR blower to an intercooler for intake air pressure-fed from a compressor of the turbocharger, in chapter 2 "Countermeasure technique to IMO Tier III NOx Regulations and Remaining Problem", 2-2 "Countermeasure Engine Technique to IMO Tier III NOx regulations", 2-2-2 "Exhaust Gas Circulation", pp. 14-16. Here, IMO in Non-Patent Literature 2 is an abbreviation of the International Maritime Organization.

Non-Patent Literature 3 has introduced a technology, as an example of SOₓ-complaint technology using a two-stroke engine made by MAN B&W with an output of 21,000 kW equipped on Ficaria Seaways of Demark by Alfa Laval, in which, by a treatment by a scrubber for exhaust gas using seawater or fresh water depending on the situation while fuel oil with a sulfur content of 2.2 percent is being used, cleaning and removal are performed to a level at the time of using fuel oil with a sulfur content of 0.1 percent in exhaust gas, which is a required level scheduled to come into force in 2015 by IMO (International Maritime Organization).

Furthermore, the above-described SCR system using catalytic reaction has been commonly known as a known NOx reduction technology. Furthermore, in Patent Literatures WO 2013/045272 A1 and CA 2753662 A1 scrubbing technology for marine Diesel engines is disclosed as prior art to the invention.

### Citation List

### Patent Literature

PTL 1: WO2006/064805
PTL 2: Japanese Patent Application No. 2014-78668
PTL 3: Japanese Patent Application Laid-Open No. 2003-126690

### Non-Patent Literature

NPTL 1: International Convention for Prevention of Pollution from Ships, 1973, Annex I "Regulation for prevention of pollution by oil"
NPTL 2: "Report on examination and research on reduction technique of air pollutants emitted from watercrafts, 2009 edited by The Japan Institute of Marine Engineering
NPTL 3: "Wave of clean solutions", Alfa Laval International Magazine "here" No. 30, pp. 6-14 issued on November 30, 2011

### Summary of Invention

### Technical Problem

However, the conventional diesel engine exhaust gas purification equipments described above have the following problems and challenges.

In the exhaust gas treatment technology for a diesel engine that electrically treats PM in exhaust gas using corona discharge or the like described in Patent Literature 1 (for example, an electrical treatment method and equipment for exhaust gas of a diesel engine depicted in Figure 16), the following problems arise.

That is, in marine diesel engines, for example, when the exhaust gas purification equipment described in Patent Literature 1 is used for a large-displacement marine diesel engine which has a significantly large displacement compared with automobile diesel engines using diesel fuel with less content of sulfur components and uses low-quality fuel such as fuel oil containing high-concentration sulfur components (fuel oil contains sulfur components 100 to 3500 times as much as light oil: according to JIS K2204: 2007 "Diesel fuel"; 0.0010 percent by mass or lower, K2205-1990 "Fuel Oil"; 0.5 percent by mass to 3.5 percent by mass or lower), it is required to overcome a problem in which the sulfur components in the low-quality fuel such as fuel oil containing high-concentration sulfur components are not only contained as SOF in exhaust gas and EGR gas but become sulfate, thereby corroding engine components, in particular, exhaust-related components. Also, SOx based on sulfur components cannot be collected at all.

Also, in the electrical treatment method and equipment for exhaust gas (Figure 17) of a large-displacement diesel engine which particularly uses low-quality fuel such as fuel oil containing high-concentration sulfur components and from which high-speed and/or large-flow-rate exhaust gas is discharged, described in Patent Literature 2 mentioned above (previously suggested by the Applicant), with a turbine (not depicted) of a turbocharger (T/C) 114 being driven, exhaust gas cooled by a water-cooled exhaust gas cooler 115 has a content amount of PM (SOF, ISF) in the exhaust gas decreased by an electrostatic cyclone exhaust gas purification equipment (cylindrical collecting part: inner diameter of φ400 mm × length of 3000 mm; electrostatic voltage: DC-45000 V, cyclone collecting part: barrel diameter of φ260 mm) 116, then passes through a PM-free scrubber which hardly dissolves or removes PM from the exhaust gas purification equipment to a silencer (not depicted), and becomes exhaust gas to be discharged to the outside of the ship. In this exhaust gas purification equipment, in a PM-free scrubber 113 which hardly dissolves or removes organic solvent soluble components, by a thin-film layer of treatment water present (partially falling down) on each of wall surfaces constituting the PM-free scrubber, SOₓ in the exhaust gas is absorbed in the treatment water while flowing along a portion near a treatment water surface of each wall surface, dissolved, and discharged, with its concentration drastically reduced. PM in the exhaust gas merely flows along the surface of the treatment water, and the exhaust gas hardly collides with the surface of the scrubber treatment water fiercely and merely smoothly flows partially in contact with and along a portion near the surface of the PM-free scrubber treatment water. Therefore, mutual mixture does not occur.

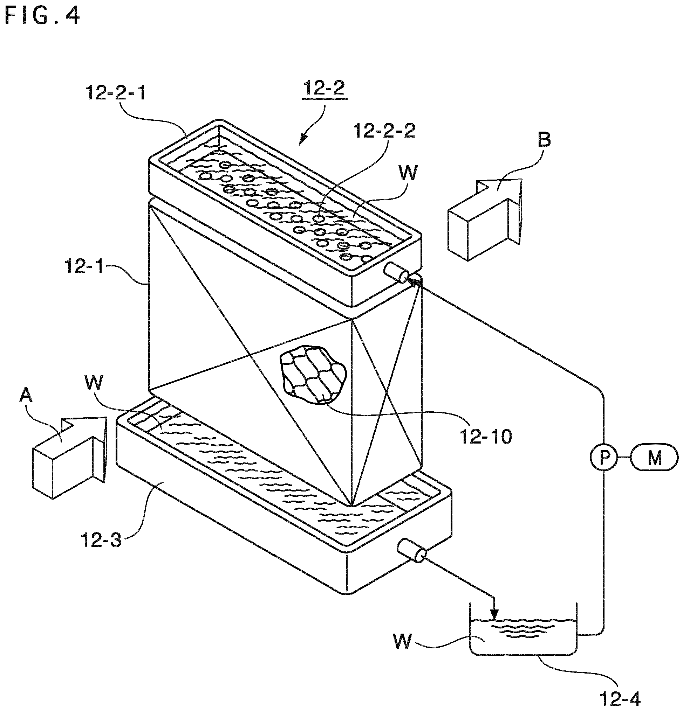

On the other hand, as for the treatment water of the conventional technology and exhaust gas (in particular, particle components), the exhaust gas fiercely collides with the surface of the scrubber treatment water for mutual mixing, as is the case with normal scrubbers such as those of a pressurized water type such as a jet scrubber, a venturi scrubber, and a spray tower and those of a packed bed type such as a packed tower and a fluidized bed scrubber (refer to title New technology and laws for pollution prevention 2011 on Atmosphere, Issue II, 11-278, Fig. 4.2.3-8 to 11-282, Fig. 4.2.3-10, authored by Technology and Laws for Pollution Prevention Editorial Board and published by Japan Environmental Management Association for Industry and issued on January 20, 2011).

Therefore, in this PM-free scrubber 113 which hardly dissolves or removes PM of the exhaust gas purification equipment, only SOₓ is mainly dissolved in the treatment water, and an oily mixture mainly including an n-hexane extract derived from fuel or lubricating oil is only slightly dissolved and contained. Therefore, in post treatment with waste treatment water of this PM-free scrubber 113 which hardly dissolves or removes PM, sulfur-derived components can be treated with a small number of simple processes such as neutralization and filtration and by a small-sized treatment device. Without requiring a function of treating PM by an expensive, large-sized treatment device including a control unit with complex, sophisticated control and having low installation flexibility (including a storage facility for preventing treated waste water containing oil from being discharged to the ocean), discharge of treated waste water to the ocean is possible even during sailing in and outside special areas. Also, scrubber-through operation is possible (when water (seawater) in the scrubber tank approaches waste water regulation reference values (regulation reference values for pH, oil, heavy metals)), seawater is drawn to supply and replace tank water (seawater) as appropriate. That is, the treatment of the scrubber waste water (such as pH adjustment and pollutant collection) is not performed.

However, for the operation of the electrostatic cyclone exhaust gas purification equipment 116, a long electrostatic sampling tube part requiring large voltage, a cyclone collecting unit, a high-voltage power supply device and a large space for installation of and its device group and sophisticated operation technique for activating the device group are required. Also, since an EGR system is not provided, the exhaust gas contains a nitrogen oxide.

Note that when the exhaust gas is discharged without treated at all as depicted in Figure 18, a problem of waste disposal process of the scrubber treatment water is not posed, but it goes without saying that all harmful components contained in the exhaust gas are discharged as they are to have adversely effect on environmental protection.

Also, a smoke-exhaust treatment device described in Patent Literature 3 is formed of a catalyst tank provided to a device tower where exhaust gas containing sulfur oxides circulates and formed of an activated carbon fiber layer and water supply means provided in the device tower above the catalyst tank to supply water for generating sulfuric acid to the catalyst tank. This water supply means is infiltrating means which distributes and supplies water to an upper portion of the activated carbon fiber layer via a capillary infiltrating member or spray means which directly sprays water in an atomizing manner onto an upper wall surface of the activated carbon fiber layer by using a sprinkler, pipe-shaped shower, or the like (spraying means). The activated carbon fiber layer has a structure in which many passages are in a state of vertically extending as relatively small linear spaces formed by alternately multi-layering flat-plate activated carbon fiber sheets in a flat-plate shape and wave-plate activated carbon fiber sheets in a wave-plate shape with continuous waves in a V shape (in the example of Figure 4, a pitch between the flat-plate activated carbon fiber sheets is on the order of 4 mm, and a width h of a mountain part of the wave-plate activated carbon fiber sheets is on the order of 10 mm in a V-shaped sectional shape); water with a particle diameter of 200 µm is sprayed from above for supply; and exhaust gas is sent from below. Therefore, the exhaust gas flows from below to above in the passages along the axial center of the passages as relatively small linear spaces, and droplets of water sprayed and supplied from above with a particle diameter of 200 µm intermittently roll down like balls. With this, moisture is properly supplied to the surface of the activated carbon fiber to flow from above in the axial direction to below in the axial direction of the passages so that excessive moisture on the wall surface of the passages is prevented from forming a water film or water wall on the surface of the activated carbon fiber. Partially, with water directly supplied to an upper portion of the flat-plate activated carbon fiber sheets and the wave-plate activated carbon fiber sheets by using a sprinkler, pipe-shaped shower, or the like (spraying means), water droplets partially flow so as to be opposed from above to below in the axial direction in a channel as colliding with the exhaust gas flowing from below to above in the axial direction in the passages. That is, in the structure, as preventing a water film or water wall from being formed on the surface of the activated carbon fiber (in the present invention described below, a water film or water wall is formed on the surface), the exhaust gas and water are both along the common axial center of the passages as relatively small linear spaces, but can collide with each other as flowing in opposite directions in the passages. When PM is contained in the exhaust gas, the treatment water have not only SOₓ dissolved therein but also PM contained therein. Therefore, there is a problem of a treatment of discarding scrubber treatment water. Also, if the treatment water is discharged as it is, it goes without saying that the discharge has an adverse effect on environmental protection.

On the other hand, in Non-Patent Literature 1, in Chapter 3 "Requirements for machinery spaces of all ships", Part C "Control of discharge of oil", Regulation 15 "Control of discharge of oil", A. "Discharges outside special areas", 2 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million". In B. "Discharges in special areas", 3 "Any discharge into the sea of oil or oily mixtures from ships of 400 gross tonnage and above shall be prohibited except when all the following conditions are satisfied", it is defined in .3 that "the oil content of the oily mixture without dilution does not exceed 15 parts per million".

Note herein that "oil" refers to crude oil, fuel oil, and lubricant, "oily" is supposed to be interpreted according to this meaning, and "oily mixtures" refers to mixtures containing oil.

Also, in the marine diesel engine described in Non-Patent Literature 2, by recirculating EGR gas diverted from exhaust gas to intake air, it is possible to reduce NOₓ by 80% from the exhaust gas and remove SOₓ nearly 100% from the EGR gas. However, regarding the influence of soot and dust passing through the scrubber and sulfur components still contained in PM on the diesel machine body and the system, it is required not only to perform an actual ship test for a long period of time but also to prevent wash water discharged outboard from the scrubber from influencing the environment and ecosystem. In particular, regarding this wash water of the scrubber, waste water treatment is expected to become a large problem, such as removal of environmental pollution components or ecosystem influential components and pH adjustment, together with dissolution and floating of PM, dissolution of SO₂, and so forth. However, in sailing over a long period of time with a large-displacement marine diesel engine, treatment of at least an EGR gas flow, preferably a full amount of an exhaust gas flow including the EGR gas flow, is totally unrealistic if only a scrubber is used, in view of the size of the device (including a storage facility for preventing treated waste water containing oil from being discharged to the ocean).

On the other hand, in "Wave of clean solutions" described in Non-Patent Literature 3, "new clean technologies contribute to the shipping industry to reduce its environmental impact and meet stricter legislation for pollution at sea", and description goes as follows.

### Summary (I) Technical Background

### (I) IMO extends regulations for ship pollution

### (a) Sulfur oxides (SOx) (applied both to new-built and existing vessels)

Worldwide regulations with limits for the maximum sulfur concentration of the fuel oils apply. Stricter regulations apply in emission control areas. These limits are subject to a series of step changes starting in 2012. The alternative to using low-sulfur fuel is to equip exhaust gas purification equipment to reach the levels.

### (b) Nitrogen oxides (NOx) (applied only to new-built vessels)

Existing regulation requirements apply to installed marine diesel engines of more than 130 KW output power. Different levels of control apply based on the ship construction date. To new ships travelling the emission control area, stricter regulations (Tier III) will apply from 2016.

### (c) Bilge water (applied both to new-built and existing vessels)

Bilge water overboard limit is 15 ppm.

### Summary (II) Water treatment technology

### (II) Alfa Laval's water treatment technology

(a) The Pure Bilge solution for treating only oily waste in a vessel's bulge tank uses a single-stage high-speed centrifugal separation system to purify large water volumes without the use of chemicals, absorption filters or membranes, and oil-in-water content is less than 5 ppm.
(b) To enable ships to reach IMO demands for a reduction in NOx emissions of 80 percent, Alfa Laval is collaborating with MAN Diesel to develop an exhaust gas recirculation (EGR) system for large two-stroke diesel engines.
(c) On SOx emissions, Alfa Laval has developed a complete exhaust gas purification process. The system, which is currently undergoing onboard tests, also uses Alfa Laval separators to purify the dirty water coming from the scrubber before it is released into the ocean.

### Summary (III) SOx-compliant technology

### (III) Alfa Laval's SOx-compliant technology

Equipped on (Ficaria Seaways (Denmark) = output of 21,000 kW, MAN B&W two-stroke engine)
(a) The fuel is fuel oil with a sulfur content of 2.2 percent, and the exhaust gas is washed and removed so that the sulfur content is brought down to the 0.1 percent level demanded by IMO (International Maritime Organization) regulations that come into force in 2015.
(b) Alfa Laval's Pure SOₓ can use one of both seawater and freshwater depending on the situation.

"Using water, either seawater or freshwater mixed with caustic soda and water solution, scrubbers wash the exhaust gas from the main engine"
- In the first stage, water is injected at a gas introduction portion to cool exhaust gas, and the majority of the soot and dust in the exhaust gas are removed here.
- In the second stage, sulfur oxides and others in the exhaust gas are further washed in a scrubber tower. To prevent water droplets in the exhaust gas from being carried away and corrosion, the water droplets in the gas are removed by a demister before being discharged through from the funnel.
- In the third stage, sulfur dioxides remaining in the exhaust gas are further washed. To prevent condensation and corrosion, small water droplets are removed from the exhaust gas before being discharged from the funnel of the ship (98 percent of sulfur of the exhaust gas is removed).

From the description "It can be simply described as a big shower cabinet placed in the funnel of the ship," on line 16 in the second column to line 1 in the third column on page 12 of this Non-Patent Literature 3, the description "The scrubber equipped with the funnel of the ship can be described as a big shower cabinet," in a note in the photograph on page 14, and water and seawater being supplied from an upper portion of the scrubber of a hybrid system diagram (not depicted) and discharged together from a lowermost portion and the exhaust gas being supplied from a bypass dumper to a lower portion of the scrubber and discharged to the funnel directly coupled to an uppermost portion, it can be found that the technology is of a jet scrubber type. That is, it can be found that the technology is a type in which exhaust gas fiercely collides with the surface of scrubber treatment water and has a function capable of also removing particle components in the exhaust gas together with gaseous components. Therefore, for post treatment of scrubber water, it is required to prepare each structure and equipment described in the hybrid system diagram (not depicted) and operate and run these in a sophisticated manner.

Still further, as a known NOₓ reduction technology, the SCR scheme using catalytic reaction has been generally known. In this SCR scheme, in the state in which the temperature of exhaust gas of the engine is sufficiently high, if the catalyst is activated, and if the surface of the catalyst is reliably exposed without being covered with soot or the like, the catalyst functions normally and a high degree of NOₓ reduction can be achieved. However, in a general marine engine, a low-speed engine with a long stroke is in the mainstream, compared with an automobile engine or the like, in order to ensure an improvement in specific fuel consumption. It is often the case that energy of combustion gas in a cylinder is slowly and reliably taken out as motive power for a long time and the temperature of exhaust gas is low due to heat dissipation together with a contact of the combustion gas with the wall surface of the cylinder or the like over a long period of time. Not only during warm-up immediately after the start of the engine but also during steady operation, if the temperature of the catalyst becomes below 300 degrees Celsius, it is often the case that the catalyst do not sufficiently exert its functions and the NOx reduction ratio is insufficient. Moreover, in an exhaust purification system of the SCR scheme for a diesel engine using low-quality fuel equivalent to or lower than fuel oil containing high-concentration sulfur components, a problem is pointed out that the catalyst is covered with PM contained in the exhaust gas and the catalyst is poisoned by sulfur contained in the fuel in large quantity, thereby preventing its NOₓ purifying function from stably functioning over a long period of time. As improvement measures, it is desired to remove sulfur from the low-quality fuel equivalent to or lower than fuel oil containing high-concentration sulfur components. However, desulfurization has not yet been achieved because soaring fuel price with enormous capital investment associated with installation of large-scale desulfurizing device to an oil refinery is expected.

In view of the above-described problems in the conventional technology, the present invention is to provide an equipment which removes SOₓ with high efficiency while inhibiting mixture of PM into treatment water, the PM in exhaust gas of a large-displacement marine diesel engine which particularly uses low-quality fuel such as fuel oil containing high-concentration sulfur components and from which high-speed and/or large-flow-rate exhaust gas is discharged, to purify the exhaust gas and, with mixture of PM into scrubber treatment water being inhibited, treats SOₓ with a small number of simple processes such as neutralization and filtration and by a small-sized treatment device, thereby allowing discharge to the ocean even during sailing in and outside special areas. That is, the present invention is to provide an exhaust gas purification equipment for a marine diesel engine using low-quality fuel such as fuel oil containing high-concentration sulfur components, in which without requiring an expensive, large-sized treatment equipment for scrubber treatment water including a control unit with complex, sophisticated control (including a storage facility for preventing treated waste water containing oil from being discharged to the ocean) and having low installation flexibility, treatment water can be easily managed even with an inexpensive, easy-to-maintain, small-sized facility with high installation flexibility, scrubber-through operation is also possible sometimes, enormous capital investment associated with installation of large-scale desulfurizing device in oil industry is not required, and therefore fuel cost can be lowered.

### Solution to Problems

An exhaust gas purification equipment for a marine diesel engine using low-quality fuel such as fuel oil containing high-concentration sulfur components according to the present invention is characterized, as a first aspect, in that the exhaust gas purification equipment includes a scrubber that hardly removes PM using a difference in diffusion speed between gas and particles by a smooth flow of an exhaust gas along near a surface of a water thin-film layer made of treatment water flowing down along each of wall surfaces constituting the scrubber without fierce collision of the exhaust gas against the surface of the treatment water, disposed to an exhaust pipe continued to an exhaust manifold of the engine.

An exhaust gas purification equipment for a diesel engine using low-quality fuel such as fuel oil containing high-concentration sulfur components according to the present invention is characterized, as a second aspect, in that the exhaust gas purification equipment includes: a scrubber that hardly removes PM using a difference in diffusion speed between gas and particles by a smooth flow of an exhaust gas along near a surface of a water thin-film layer made of treatment water flowing down along each of wall surfaces constituting the scrubber without fierce collision of the exhaust gas against the surface of the treatment water, disposed to an exhaust pipe continued to an exhaust manifold of the engine; and a branching part for causing part of the exhaust gas to branch as EGR gas provided to an exhaust pipe on a downstream side of the scrubber to cause the EGR gas to be recirculated to intake air of the engine via an EGR piping and an EGR valve continued to the branching part.

In the exhaust gas purification equipment for the marine diesel engine using the low-quality fuel such as fuel oil containing high-concentration sulfur components of the second aspect is characterized, as a third aspect, in that the exhaust gas purification equipment further includes an another scrubber disposed to the EGR piping, the scrubber that hardly removes PM using a difference in diffusion speed between gas and particles by a smooth flow of an exhaust gas along near a surface of a water thin-film layer made of treatment water flowing down along each of wall surfaces constituting the scrubber without fierce collision of the exhaust gas against the surface of the treatment water.

Also, in the exhaust gas purification equipments of the above-described first to third aspects, the scrubber that hardly removes PM has the following preferred modes: wherein the scrubber has a core of a honeycomb structure arranged perpendicularly to the exhaust pipe or the EGR piping, the honeycomb structure being formed of alternately-multilayered wave plates and flat plates made of a porous ceramic material with excellent water absorbency and with glass fiber as a framework, a water supply unit provided on an upper portion of the core over a nearly entire length of the core so as to always wet a surface of the core and arranged so that the exhaust gas or the EGR gas flows in and out in a direction (horizontal direction) substantially orthogonal to the core and passes inside the core having many tunnel-shaped gas flow channels with micro sections of the honeycomb core, and a tray provided on a lower portion of the core over a nearly entire length of the core, the tray receiving treatment water obtained by purifying the exhaust gas; wherein the scrubber has treatment water supply nozzles provided on an upper part of the scrubber and a lower tank provided on a lower part of the scrubber in the exhaust pipe or the EGR piping, and a plurality of flat-plate-shaped and/or wave-plate-shaped treatment plates arranged between the treatment water supply nozzles and the lower tank to be perpendicular or diagonal to an up-and-down direction, the treatment water supply nozzles being provided on both sides of each of the treatment plates when the treatment plates is perpendicularly arranged or the treatment water supply nozzles being each provided on an upper surface side of the treatment plates when the treatment plates is diagonally arranged, for supply of treatment water to always wet the surface and to flow the exhaust gas or the EGR gas in and out in a direction (horizontal direction) substantially orthogonal to a direction of the arrangement of the treatment plates; or wherein the scrubber has a plurality of lower rolls disposed to a lower portion of the exhaust pipe or the EGR piping under a water surface of the tray, an endless belt disposed in a serpentine shape between the lower rolls and a plurality of upper rolls corresponding to the lower rolls, and many wet movable wall surfaces vertically formed in an exhaust gas or EGR gas flow channel by driving at least one of each of the rolls to flow the exhaust gas or the EGR gas in and out in a direction (horizontal direction) substantially orthogonal to a direction of formation of the movable wall surfaces.

### Advantageous Effects of Invention

The exhaust gas purification equipment for a marine diesel engine using low-quality fuel such as fuel oil containing high-concentration sulfur components according to the present invention has the following effects.
1. The exhaust gas passage is provided with a PM-free scrubber (No-SOF Scrubber) which hardly dissolves or removes PM, and by a thin-film layer of treatment water present (partially falling down) on each of the wall surfaces constituting the PM-free scrubber, SOₓ as gas in the exhaust gas has a large diffusion coefficient on the order of 1.5 × 10⁻⁵ (m²/s), is absorbed in the treatment water while flowing along a portion near each wall surface and dissolved in the treatment water to significantly reduce SOx concentration for discharge. In this regard, PM having a large particle diameter on the order of 0.01 to 0.5 µm in the exhaust gas has a diffusion coefficient that is extremely small by the order of three to six digits to the order of 10⁻⁸ to 10⁻¹¹ (m²/s). Therefore, with PM only flowing along the surface of the treatment water, the exhaust gas hardly collides with the surface of the scrubber treatment water fiercely and merely smoothly flows partially in contact with and along a portion near the surface of the PM-free scrubber treatment water. Therefore, mutual mixture does not occur. Only SOₓ is mainly dissolved in the treatment water, and just a slight amount of PM is dissolved and contained therein. Therefore, in post treatment with treated waste water by the PM-free scrubber which hardly dissolves or removes PM, SOx can be treated by a small-sized treatment device with a small number of simple processes such as neutralization and filtration. Without requiring a function of treating PM by an expensive, large-sized treatment device including a control unit with complex, sophisticated control and having low installation flexibility (including a storage facility for preventing treated waste water containing oil from being discharged to the ocean), discharge to the ocean is possible even during sailing in and outside special areas. Also, scrubber-through operation is possible sometimes.
2. Since the marine fuel has a large content of sulfur, high-concentration sulfate is contained in exhaust gas. If the exhaust gas is supplied as it is as EGR gas to the combustion chamber, the sulfur components in the exhaust gas are further concentrated, and SOx corrodes or wears out engine components such as a piston, a piston ring, a cylinder, a cylinder head, a supply/exhaust valve, and a valve stem; and exhaust related components such as an exhaust pipe, a muffler, an economizer, and recuperator, thereby impairing durability of the engine and its related components. According to the device of the present invention, the exhaust gas passage is provided with the PM-free scrubber that hardly dissolves or removes PM. Of SOₓ as gas and PM as particles, SOₓ has a large diffusion coefficient on the order of 1.5 × 10⁻⁵ (m²/s), and is therefore removed by the PM-free scrubber and is hardly contained in the exhaust gas. The exhaust gas contains PM, but the content amount of SOx is decreased. Also, only SOₓ is mainly dissolved in the treatment water, and PM having a large particle diameter on the order of 0.01 to 0.5 µm has an extremely small diffusion coefficient by the order of three to six digits to the order of 10⁻⁸ to 10⁻¹¹ (m²/s), and therefore only a slight amount thereof is dissolved and contained. Therefore, in post treatment on the treatment water of this PM-free scrubber which hardly dissolves or removes PM, SOx can be treated by a small-sized treatment device with a small number of simple processes such as neutralization and filtration. Without requiring a function of treating PM by an expensive, large-sized treatment device including a control unit with complex, sophisticated control and having low installation flexibility (including a storage facility for preventing treated waste water containing oil from being discharged to the ocean), discharge of treated waste water to the ocean is possible even during sailing in and outside special areas. Also, scrubber-through operation is possible sometimes.
3. To the exhaust pipe, a PM-free scrubber which dissolves SOx as gas in the exhaust gas into its treatment water since its diffusion coefficient is large on the order of 1.5 × 10⁻⁵ (m²/s) but hardly dissolves or removes PM is equipped, a branching part is disposed downstream thereof, an EGR piping which causes part of the exhaust gas to branch as EGR gas is provided. The EGR piping further has the PM-free scrubber disposed thereto, the scrubber which dissolves SOₓ in the EGR gas in its treatment water but hardly dissolves or removes PM having a large particle diameter on the order of 0.01 to 0.5 µm because its diffusion coefficient is extremely small by the order of three to six digits to the order of 10⁻⁸ to 10⁻¹¹ (m²/s) to recirculate the EGR gas to an intake pipe. With this, SOx is removed twice by the PM-free scrubber to become clean EGR gas. For the exhaust gas, the contents of SOₓ and NOₓ are decreased. With the temperature of the branched EGR gas making contact with treatment water in the PM-free scrubber, the temperature of the EGR gas is decreased, thereby making it easy to ensure a high EGR rate. With a decrease in combustion temperature in the combustion chamber, the occurrence of nitrogen oxides is inhibited, heat dissipation from the cylinder wall surface or the like is decreased to improve specific fuel consumption, and also SOₓ contained in the EGR gas is decreased. With this, concerns of impairing durability of the engine and related components with engine components and exhaust-related components promoted to be worn or corroded by SOx are eliminated. Note that since the PM-free scrubber to be equipped with the EGR piping may have a processing performance capable of treating only EGR gas, the processing performance may be smaller than that when the entire amount of the exhaust gas is to be treated, a small-sized, small-capacity, inexpensive device is enough. Also, the amount of treatment water is decreased, thereby allowing a decrease in sludge and a decrease in the amount of discharge of treated waste water to the ocean during sailing. Also, scrubber-through operation is possible sometimes.
4. The PM-free scrubber has a structure in which a core of a honeycomb structure, in which wave plates and flat plates made of a porous ceramic material with excellent water absorbency and with glass fiber as a framework are alternately multilayered, is arranged perpendicularly to the exhaust pipe or the EGR piping, a water supply unit is provided to an upper portion of the core over a nearly entire length of the core so as to always wet a surface of the core and arranged so that the exhaust gas or the EGR gas flow flows in and out at a flow speed equal to or slower than 7 m/sec in a direction (horizontal direction) substantially orthogonal to the core and passes inside many gas flow channels with tunnel-shaped micro sections of the honeycomb core, and a tray which receives treatment water obtained by purifying the exhaust gas is provided to a lower portion of the core over a nearly entire length of the core; treatment water supply nozzles are provided on an upper part and a lower tank is provided on a lower part in the exhaust pipe or the EGR piping, a plurality of flat-plate-shaped and/or wave-plate-shaped treatment plates are arranged between both the treatment water supply nozzles and the lower tank to be perpendicular or diagonal to an up-and-down direction, the treatment water supply nozzles are provided on both sides of each of the treatment plates when the arrangement of the treatment plates is perpendicular or the treatment water supply nozzles are each provided on an upper surface side of the treatment plates when the arrangement is diagonal to supply treatment water so as to always wet the surface, and the exhaust gas or the EGR gas flows in and out at a flow speed equal to or slower than 7 m/sec in a direction (horizontal direction) substantially orthogonal to a direction of the arrangement of the treatment plates; or a plurality of lower rolls are disposed to a lower portion of the exhaust pipe or the EGR piping under a water surface of the tray, an endless belt is disposed in a serpentine shape between the lower rolls and a plurality of upper rolls corresponding to the lower rolls, many wet movable wall surfaces are vertically formed in an exhaust gas or EGR gas flow channel by driving at least one of each of the rolls, and the exhaust gas or the EGR gas flows in and out in a direction (horizontal direction) substantially orthogonal to a direction of formation of the movable wall surfaces at a flow speed equal to or slower than 7 m/sec. Thus, regarding the treatment water, the surface inside the core having gas flow channels with tunnel-shaped micro sections, the surfaces of the treatment plates, or the surface of the movable wall surface is covered with a water flow of a water film flowing from above toward below. With the exhaust gas and the EGR gas flowing in and out in a horizontal direction substantially orthogonal to the flow of the water film on these water surfaces but being at low flow speed equal to or smaller than 7 m/sec, the exhaust gas and the EGR gas are orthogonal to each other as directions of flowing, but they merely flow in contact with the water coating film. Therefore, as in Patent Literature 3, the exhaust gas and the treatment water are both along the common axial center of the passages as linear spaces with relatively small sections and flow in opposite directions in the passage to prevent mutual collision, and there is little fear in which PM particles are contained in the treatment water.
5. In the SCR scheme using catalytic reaction known as known NOₓ reduction technology, in the state in which the temperature of exhaust gas of the engine is sufficiently high, the catalyst is activated. Also, if the surface of the catalyst is reliably exposed without being covered with soot or the like, the catalyst functions normally and a high degree of NOₓ reduction can be achieved. However, in a general marine engine, a low-speed engine with a long stroke is in the mainstream, compared with an automobile engine or the like, in order to ensure an improvement in specific fuel consumption. It is often the case that energy of combustion gas in a cylinder is slowly and reliably taken out as motive power for a long time and the temperature of exhaust gas is low due to heat dissipation with a contact of the combustion gas with the cylinder wall surface or the like over a long period of time. Not only during warm-up immediately after the start of the engine but also during steady operation, it is often the case that the temperature of the catalyst becomes below 300 degrees Celsius, the catalyst cannot sufficiently exert its functions, and the NOx reduction ratio is insufficient. Moreover, in an exhaust purification system of the SCR scheme for a diesel engine using low-quality fuel such as fuel oil containing high-concentration sulfur components, a problem has been pointed out that the catalyst is covered with PM contained in the exhaust gas and the catalyst is poisoned by sulfur contained in the fuel in large quantity, thereby preventing its NOₓ purifying function from stably functioning over a long period of time. As improvement measures, it is desired to remove sulfur from the low-quality fuel such as fuel oil containing high-concentration sulfur components. However, it is difficult to say that the measures are effective improvement measures because soaring fuel price with enormous capital investment associated with installation of large-scale desulfurizing device to an oil refinery is expected. In the device of the present invention, each component does not have temperature dependency to a degree of SCR, is not influenced by PM in the exhaust gas, is hardly degraded by SOₓ using low-quality fuel such as fuel oil containing high-concentration sulfur components, can stably exert the exhaust gas purifying function over a long period of time immediately after the start of the engine to achieve a high NOₓ reduction ratio, and can reliably contribute to environmental protection. Furthermore, enormous capital investment associated with installation of large-scale desulfurizing device in oil industry is not required, and therefore fuel cost can be lowered.

### Brief Description of Drawings

Figure 1 is a block diagram depicting an entire structure of a device of a first example of the present invention.
Figure 2 is a block diagram depicting an entire structure of a device of a second example of the present invention.
Figure 3 is a block diagram depicting an entire structure of a device of a third example of the present invention.
Figure 4 is a conceptual diagram depicting a first example of a PM-free scrubber according to the present invention.
Figure 5 is a conceptual diagram depicting a second example of the PM-free scrubber according to the present invention.
Figure 6 is a conceptual diagram depicting a third example of the PM-free scrubber according to the present invention.
Figure 7 is a conceptual diagram depicting a fourth example of the PM-free scrubber according to the present invention.
Figure 8 is a descriptive diagram depicting working principles of the PM-free scrubber according to the present invention.
Figure 9 is a block diagram depicting an entire structure of an exhaust gas purification equipment used to obtain basic characteristics in the examples of the present invention.
Figure 10 is a block diagram depicting an entire structure of an exhaust gas purification equipment used as a conventional example, in the examples of the present invention.
Figure 11 is a diagram depicting SO₂ concentration statuses in the examples of the present invention as compared with the basic characteristics and the conventional example.
Figure 12 is a diagram depicting NOx concentration statuses in the examples of the present invention as compared with the basic characteristics.
Figure 13 is a diagram depicting n-hexane extraction values in PM-free scrubber treatment water in the examples of the present invention as compared with a conventional example.
Figure 14 is a diagram depicting transparency of scrubber treatment water in a conventional example in the examples of the present invention.
Figure 15 is a diagram depicting transparency of PM-free scrubber treatment water of the first aspect in the examples of the present invention.
Figure 16 is a schematic diagram depicting an example of a conventional diesel engine exhaust gas purification equipment.
Figure 17 is a block diagram depicting an example of structure of a conventional diesel engine exhaust gas purification equipment using fuel equivalent to or lower than fuel oil in quality.
Figure 18 is a block diagram depicting an example of structure without the conventional diesel engine exhaust gas purification equipment using fuel equivalent to or lower than fuel oil in quality.

### Description of Embodiments

First, the principles of the PM-free scrubber described in Patent Literature 2 previously suggested by the inventors are described.

### (1) Diffusion coefficients of gas molecules and fine particles

- Diffusion speeds of gas molecules (what particularly matters in the technical field of the application is SO₂) and fine particles (what particularly matters in the technical field of the application is PM = ISF, Sulfate, SOF) greatly differ from each other. Gas molecules are far more prone to diffuse than fine particles. An index of diffusion speed is a diffusion coefficient D.
- Diffusion coefficients in air at room temperature of 20°C and 1 atmospheric pressure are compared.
   SO₂: D = 1.5 × 10⁻⁵ (m²/s)

The diffusion coefficient (Brownian diffusion) of fine particles (PM) depends on a particle diameter d and, as d is smaller, the diffusion coefficient is larger.

Diffusion coefficients of fine particles are listed in the following table (Basics of Aerosol Science and Technology by Kanji Takahashi, Morikita Publishing Co., Ltd. (2004), p. 215).

| Particle diameter d of fine particles (µm) | Diffusion coefficient D (m²/s) |
|---|---|
| 0.01 | 5.15 × 10⁻⁸ |
| 0.05 | 2.27 × 10⁻⁹ |
| 0.1 | 6.67 × 10⁻¹⁰ |
| 0.5 | 6.31 × 10⁻¹¹ |

- Note that the range of particle diameters of PM is in a range of 0.01 to 0.5 µm.
- The diffusion coefficient of SO₂ gas is larger than that of PM by the order of three to six digits.

### (2) PM-free scrubber

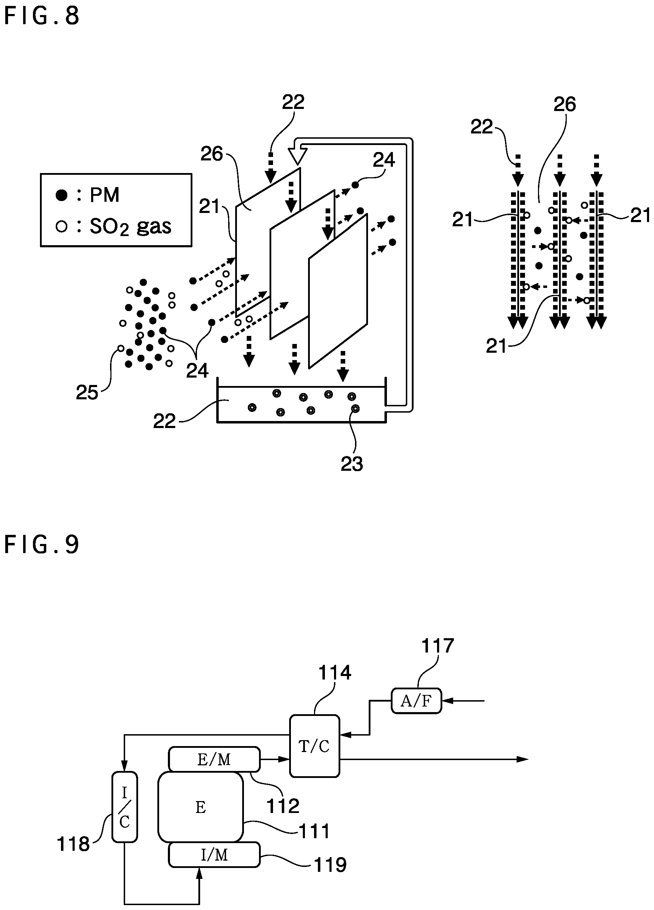

- The PM-free scrubber focuses on a difference in diffusion speed between SO₂ (gas) and PM (particles).
- A parallel-plate-type PM-free scrubber is described based on Figure 8.

In Figure 8, the reference numeral 21 denotes a parallel plate substantially vertically arranged, 22 denotes treatment water, 23 denotes a sulfate ion dissolved in the treatment water, 24 denotes PM, and 25 denotes SO₂, which are both contained in exhaust gas and EGR gas. The reference numeral 26 denotes a gas flow channel. Specifically, in the case of the PM-free scrubber, the surfaces of walls of the parallel plates 21 are covered with water flows of water films flowing from above toward below, and the exhaust gas and the EGR gas containing PM 24 and SO₂ 25 flow into the gas flow channel 26 from a direction (horizontal direction) substantially orthogonal to the parallel plates 21, and flow out. However, the exhaust gas and the EGR gas merely flow in contact with the water coating film, although the flow direction of the water flows flowing as thin coating films from above toward below over the surfaces of the walls of the parallel plates 21 and the flow direction of the exhaust gas and the EGR gas flowing between the water coating films on the surfaces of the parallel plates 21 are orthogonal to each other as directions of flowing. Therefore, the exhaust gas and the treatment water do not flow both along a common axial center of a passage, which is a relative-small linear space, in opposite directions and do not collide with each other, unlike in Patent Literature 3.

Also, SO₂ 25 has high absorbency in water and also has extremely high solubility in water. SO₂ 25 has an extremely large diffusion coefficient. Therefore, SO₂ 25 contained in the exhaust gas and the EGR gas flowing as crossing in a portion near the water film surface flowing as covering the wall surfaces of the parallel plates 21 when passing through the plates forming the gas flow channel 26 has high absorbency, but is dissolved from its surface. With this dissolution, the concentration of SO₂ 25 of the exhaust gas flowing in the portion near the water film surface momentarily decreases, but SO₂ 25 with an extremely large diffusion coefficient immediately diffuses and moves at high speed to the portion near the water film surface from an adjacent flow with a high concentration in the exhaust gas flow to be supplied to the water film surface. With this phenomenon of successively repeating dissolution on the water film surface and high-speed diffusion from the exhaust gas flow to the water film surface, most of SO₂ 25 is absorbed in water. On the other hand, the PM 24 has a large particle diameter and an extremely small diffusion coefficient. Therefore, the phenomenon of successively repeating dissolution on the water film surface and diffusion from the exhaust gas flow to the water film surface does not occur to the PM with a particle shape. Thus, most of the PM is not absorbed, and is discharged directly through the PM-free scrubber. Then the exhaust gas flow speed is required to be equal to or slower than 7 m/sec and, if the flow speed exceeds 7 m/sec, there is a fear that ruffles occur on the water film surfaces covering the surface of the parallel plates 21 to cause droplets.

### (3) Effects of PM-free scrubber

- In the PM-free scrubber, SO₂ 25 is absorbed, and the PM 24 is let pass through, and therefore pollution by the PM 24 of the scrubber water can be reduced. The scrubber water, which absorbs SO₂ 25 to become sulfurous acid water and then become sulfuric acid water, is subjected to neutralization process to be discharged to the ocean.
- By contrast, in the case of a conventional shower-type or venturi-type scrubber, not only SO₂ 25 but also PM 24 is absorbed in the scrubber water. Therefore, pollution of the scrubber water is fierce, and the number of waste water processes is enormous compared with the PM-free scrubber.

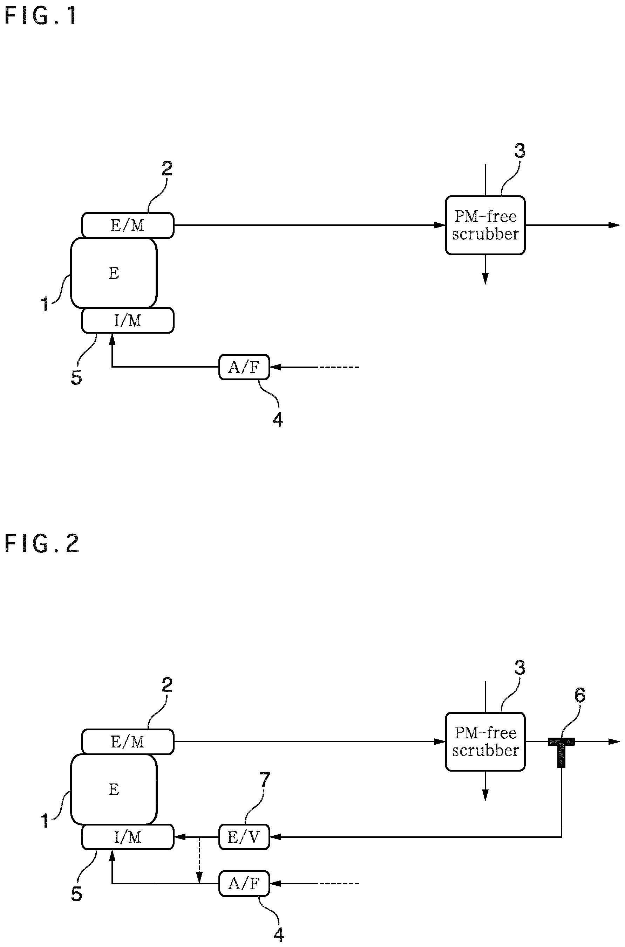

An exhaust gas purification equipment for a marine diesel engine depicted in Figure 1 as a device of a first example of the present invention is configured to have a PM-free scrubber 3, which dissolves SOₓ in exhaust gas into treatment water but hardly dissolves or removes PM into or from treatment water, disposed to an exhaust pipe downstream from an exhaust manifold (E/M) 2 of a diesel engine (E) using low-quality fuel such as fuel oil containing high-concentration sulfur components as fuel, for discharge via a muffler (not depicted) disposed downstream from the PM-free scrubber 3 and for causing outside air to be taken to an intake manifold (I/M) 5 of the engine via an air filter (A/F) 4.

In the case of the exhaust gas purification equipment configured as depicted in Figure 1, exhaust gas passes through the PM-free scrubber 3 which hardly dissolves or removes PM and is discharged from the exhaust gas purification equipment as gas containing PM but having SOₓ extremely reduced via a silencer (not depicted) to the outside the ship. In this exhaust gas purification equipment, in the PM-free scrubber 3 which hardly dissolves or removes PM, by a thin-film layer of treatment water present (partially falling down) on each of the wall surfaces constituting the PM-free scrubber, SOₓ as gas in the exhaust gas has a large diffusion coefficient on the order of 1.5 × 10⁻⁵ (m²/s), is absorbed in the surface of the treatment water while flowing along each wall surface, and is dissolved in the treatment water to extremely reduce its concentration, and is discharged. PM having a large particle diameter on the order of 0.01 to 0.5 µm in the exhaust gas has a diffusion coefficient that is extremely small compared with SOₓ as gas, by the order of three to six digits to the order of 10⁻⁸ to 10⁻¹¹ (m²/s). Therefore, with PM only flowing along a portion near the surface of the treatment water, unlike the case with scrubbers such as those of the pressurized water type such as a jet scrubber, a venturi scrubber, and a spray tower and those of the packed bed type such as a packed tower and a fluidized bed scrubber, the exhaust gas hardly collides with the surface of the scrubber treatment water fiercely and merely smoothly flows partially in contact with and along the surface of the PM-free scrubber treatment water. Therefore, mutual mixture does not occur.

Therefore, in this PM-free scrubber 3 which hardly dissolves or removes PM of the exhaust gas purification equipment, only SOₓ is mainly dissolved in the treatment water, and just a slight amount of PM is dissolved and contained therein. Thus, in post treatment with treated waste water by this PM-free scrubber 3 which hardly dissolves or removes PM, SOₓ can be treated by a small-sized treatment device with a small number of simple processes such as neutralization and filtration. By extremely simplifying, downsizing, or without requiring a function of treating PM derived from fuel or lubricating oil by an expensive, large-sized treatment device including a control unit with complex, sophisticated control and having low installation flexibility (including a storage facility for preventing treated waste water containing oil from being discharged to the ocean), discharge to the ocean is possible even during sailing in and outside special areas. Also, scrubber-through operation is possible sometimes.

An exhaust gas purification equipment for a diesel engine depicted in Figure 2 as a device of a second example of the present invention is configured to have: a PM-free scrubber 3 which dissolves SOₓ in exhaust gas into its treatment water but hardly dissolves or removes PM provided to an exhaust pipe downstream from an exhaust manifold 2 of a diesel engine 1 using low-quality fuel such as fuel oil containing high-concentration sulfur components as fuel, similarly to the equipment of the first example; and a branching part 6 provided downstream thereof to an exhaust pipe to a muffler (not depicted) to connect an EGR piping which diverts EGR gas, and to cause the diverted EGR gas to be recirculated to an intake pipe from an intake manifold 5 or an air filter 4 while the diverted EGR gas is subjected to flow-rate control by an EGR valve 7.

In the case of the exhaust gas purification equipment configured as depicted in Figure 2, as with the equipment of the first example depicted in Figure 1, the exhaust gas is cleaned, and becomes gas containing PM but having SOx drastically reduced and also NOx decreased. In this exhaust gas purification equipment, by equipping, with the exhaust pipe, the PM-free scrubber 3 which hardly dissolves or removes PM and the EGR piping which branches the EGR gas from the branching part 6 of its backwash for recirculation to intake air, SOₓ as gas in the exhaust gas and the EGR gas and having a large diffusion coefficient on the order of 1.5 × 10⁻⁵ (m²/s)is mostly removed, and PM as particles having a large particle diameter on the order of 0.01 to 0.5 µm and an extremely small order of the diffusion coefficient by three to six digits to the order of 10⁻⁸ to 10⁻¹¹ (m²/s) is hardly removed. That is, while PM is contained, SOₓ is removed by the PM-free scrubber 3 and is hardly contained in the exhaust gas and the EGR gas. The exhaust gas contains PM, but the contents of SOₓ as gas are decreased. Also, by recirculating the SOₓ-decreased EGR gas, wearing promotion and corrosion of engine components and corrosion of exhaust-related components are prevented to achieve extension of a maintenance interval and enhancement of longevity, and concerns of impairing durability is eliminated. Also, the combustion temperature in the combustion chamber is decreased to inhibit the occurrence of nitrogen oxides and also make the exhaust gas clean.

Furthermore, in the PM-free scrubber 3 which hardly dissolves or removes PM also in this exhaust gas purification equipment, only SOₓ is mainly dissolved into the treatment water and just a slight amount of PM is dissolved and contained therein. Therefore, in post treatment with treatment water of this PM-free scrubber 3 which hardly dissolves or removes PM, SOₓ can be treated by a small-sized, simple-control treatment device with a small number of simple processes such as neutralization and filtration. By extremely simplifying, downsizing, or without a function of treating PM derived from fuel or lubricating oil by an expensive, large-sized treatment device including a control unit with complex, sophisticated control and having low installation flexibility (including a storage facility for preventing treated waste water containing oil from being discharged to the ocean), discharge of treated waste water to the ocean is possible even during sailing in and outside special areas. Also, scrubber-through operation is possible sometimes.

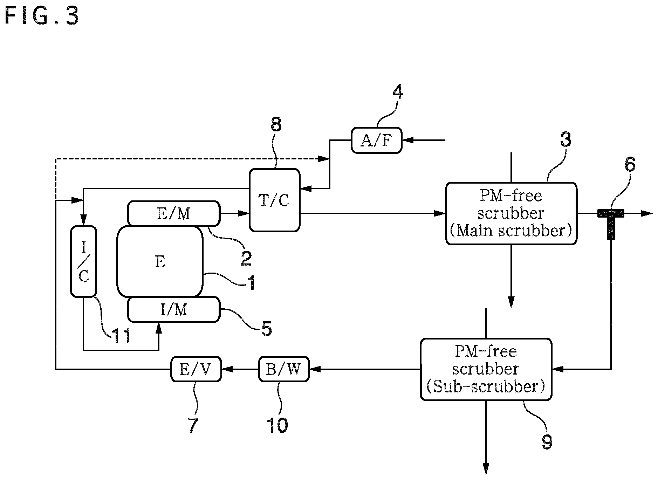

An exhaust gas purification equipment for a diesel engine depicted in Figure 3 as a device of a third example of the present invention is configured to have: a turbocharger 8 provided downstream of an exhaust manifold 2 of a diesel engine 1 using low-quality fuel such as fuel oil containing high-concentration sulfur components as fuel; a PM-free scrubber (main scrubber) 3 which hardly dissolves or removes PM provided to an exhaust pipe downstream from a turbine wheel (not depicted) of the turbocharger 8; and further a branching part 6 provided downstream thereof to an exhaust pipe to connect an EGR piping which causes part of the exhaust gas to branch as EGR gas to the branching part 6, have a PM-free scrubber (sub-scrubber) 9 which hardly dissolves or removes PM, a blower (B/W) 10 which increases pressure of the EGR gas for supply and pumping, and an EGR valve 7 disposed in this order to the EGR piping, and cause recirculation to an intake pipe before an intercooler 11 or recirculation upstream of a compressor wheel (not depicted) of the turbocharger 8, while the EGR gas is subjected to flow-rate control by an EGR valve 7. That is, the equipment of the present example is configured to first purify the overall amount of the exhaust gas after a turbine wheel (not depicted) of the turbocharger 8 is accelerated by the PM-free scrubber (main scrubber) 3 which hardly dissolves or removes PM, then further treat only the EGR gas branched from the overall amount of the exhaust gas by the PM-free scrubber (sub-scrubber) 9 which hardly dissolves or removes PM, and then perform supply and pumping by the blower (B/W) 10 to cause the accurate amount of the EGR gas to be recirculated to the intake pipe before the intercooler 11 or upstream from a compressor wheel (not depicted) of the turbocharger 8.

Also in the case of the above exhaust gas purification equipment configured as depicted in Figure 3, as with the device of the second example depicted in Figure 2, the exhaust gas is cleaned by the PM-free scrubber (main scrubber) 3, having SOₓ drastically reduced and also NOₓ decreased, although containing PM. In this exhaust gas purification equipment, by providing the PM-free scrubber (sub-scrubber) 9 which hardly dissolves or removes PM and the blower 10 to the EGR piping so that the branched EGR gas is further subjected to a second treatment at the PM-free scrubber (sub-scrubber) 9 which dissolves SOₓ as gas in the EGR gas into treatment water having a large diffusion coefficient on the order of 1.5 × 10⁻⁵ (m²/s) but hardly dissolves or removes PM having a large particle diameter on the order of 0.01 to 0.5 µm and a diffusion coefficient that is extremely small by the order of three to six digits to the order of 10⁻⁸ to 10⁻¹¹ (m²/s), SOₓ as gas having a large diffusion coefficient is mostly removed from the EGR gas, but PM as particles having a large particle diameter and an extremely small diffusion coefficient is hardly removed. That is, while PM is contained, SOₓ as gas having a large diffusion coefficient on the order of 1.5 × 10⁻⁵ (m²/s) is further removed at the PM-free scrubber (sub-scrubber) 9 and is only slightly contained in the EGR gas, and the clean EGR gas is recirculated. The exhaust gas has a content amount of nitrogen oxides decreased, and is subjected to PM-free scrubber treatment, and therefore contains many PM but hardly contains SOₓ. With the temperature of the branched EGR gas making contact with treatment water in the PM-free scrubber (sub-scrubber) 9, the temperature of the EGR gas is decreased, thereby making it easy to ensure a high EGR rate, together with supply and pumping by the blower. With a decrease in combustion temperature in the combustion chamber, the occurrence of nitrogen oxides is inhibited, heat dissipation from the cylinder wall surface or the like is decreased to improve specific fuel consumption, and also SOₓ contained in the EGR gas is significantly decreased. With this, concerns of impairing durability of the engine and related components with engine components and exhaust-related components promoted to be worn or corroded by SOₓ are eliminated.

Note that the PM-free scrubber (sub-scrubber) 9 to be equipped with the EGR piping may have a processing performance capable of treating only EGR gas, the processing performance may be smaller than the PM-free scrubber (main scrubber) 3 which treats the entire amount of the exhaust gas, and therefore becomes a small-sized, small-capacity, inexpensive device. Also, the amount of treatment water is decreased, thereby allowing a decrease in sludge and a decrease in the amount of discharge of treated waste water to the ocean during sailing.

Furthermore, the PM-free scrubbers 3 and 9 which hardly dissolve or remove PM also in this exhaust gas purification equipment, only SOₓ is mainly dissolved in the treatment water and just a slight amount of PM is dissolved and contained therein. Therefore, in post treatment with treatment water of these PM-free scrubbers 3 and 9 which hardly dissolve or remove PM, SOₓ can be treated by a small-sized treatment device with a small number of simple processes such as neutralization and filtration. By extremely simplifying, downsizing, or without requiring a function of treating PM by an expensive, large-sized treatment device including a control unit with complex, sophisticated control and having low installation flexibility (including a storage facility for preventing treated waste water containing oil from being discharged to the ocean), discharge of treated waste water to the ocean is possible even during sailing in and outside special areas. Also, scrubber-through operation is possible sometimes.

Furthermore, the PM-free scrubbers which hardly dissolve or remove PM for use in the present invention are equipped with the exhaust gas or EGR gas passage as described above. As those PM-free scrubbers, for example, any of those depicted in Figure 4 to Figure 7 can be adopted.

The PM-free scrubber depicted in Figure 4 is configured to have a desired number of multilayered honeycomb cores (for example, 250 mm in length × 250 mm in width × 100 mm in depth (manufactured by Nichias Corporation, product name; Honeycomb Washer)) in a honeycomb structure provided substantially vertically as a honeycomb unit core part 12-1, the honeycomb structure in which wave plates and flat plates made of preferably a porous ceramic-made material with excellent water absorbency and with glass fiber, carbon fiber, aramid fiber, or the like taken as a skeleton are alternately multilayered, with many tunnel-shaped exhaust gas flow channels 12-10 having micro sections configured between a flat plate and a wave plate formed therein; and have a water supply unit 12-2 arranged above the honeycomb unit core part 12-1 for water supply, the water supply unit 12-2 being formed of a water supply nozzle or a water supply duct so as to substantially uniformly supply water over the full width and length of the honeycomb unit core part 12-1. Treatment water (wash water) W supplied falls down while wetting the surface of each of the exhaust gas flow channels 12-1 having micro sections of the honeycomb unit core part 12-1, reaches an under tray 12-3 having approximately same length and width provided below the honeycomb unit core part, and is then accommodated in a post treatment water tank 12-4 (system water amount: 20 L). The treatment water W is sent by a pump P from the tank to the water supply unit 12-2 so that the surface of each of the exhaust gas flow channels 12-10 having micro sections is kept wet without being dried (water flow speed; on the order of 35 L/min) for circulated use. In the drawing, 12-2-1 denotes a water spray tank, 12-2-2 denotes a nozzle aperture, an arrow A denotes exhaust gas or EGR gas, which flows in the exhaust gas flow channels 12-10 at a flow speed equal to or slower than 7 m/sec in a direction (horizontal direction) substantially orthogonal to the honeycomb unit core part 12-1 vertically provided, an arrow B denotes exhaust gas or EGR gas with S components removed therefrom (PM almost remains), which flows out substantially orthogonally from the honeycomb unit core part 12-1, M denotes a motor for driving the pump P, and W denotes treatment water.

In the case of this PM-free scrubber, the exhaust gas or EGR gas only smoothly flows in contact with and along a portion near the wet surface of the wall surface of each of many exhaust gas flow channels having micro sections formed in the honeycomb unit core part 12-1. Therefore, unlike a normal scrubber, the exhaust gas hardly crosses and collides with the surface of the treatment water W fiercely, but flows as being calmly in contact with and along the surface. Therefore, mutual mixture does not occur. Thus, of exhaust gas or EGR gas components, SOₓ as gas having a large diffusion coefficient and high affinity with water is dissolved into its treatment water, but PM having a large particle diameter and an extremely small diffusion coefficient flows and passes through as being hardly dissolved into treatment water. Therefore, the exhaust gas and the EGR gas are discharged as having SOₓ reliably removed therefrom and having PM almost remaining and contained therein. This treatment water contains SOₓ, but hardly contains PM. With this, discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided. Furthermore, scrubber-through operation is possible sometimes.

Also, as another type having a structure similar to that of the above PM-free scrubber, a honeycomb unit core part configured by multilayering a desired number of honeycomb unit cores in a honeycomb structure is adopted, in which the honeycomb unit cores in the honeycomb structure are configured by performing a corrugating process on flat plates or embossed plates made of a thin-plate material made of austenitic stainless steel, such as SUS316L, or a mesh-plate material made of stainless steel and having fine through holes from which treatment water is permeable to their surface into a wave plate shape with many protrusions to form wave plates and alternately multilayering these wave plates to form many tunnel-shaped exhaust gas flow channels having micro sections between the multilayered wave plates, or configured by performing a corrugating process on the flat plates into a wave plate shape with many protrusions to form wave plates and, when multilayering the wave plates in alternate directions, multilayering the flat plates therebetween to form many tunnel-shaped exhaust gas flow channels having micro sections configured between the wave plates and the flat plates (drawing is omitted). Also in a PM-free scrubber adopting this honeycomb unit core part, as with that made of porous ceramic in a honeycomb core structure described above, the exhaust gas or EGR gas only smoothly flows in contact with and along the wet wall surface of each of the exhaust gas flow channels having micro sections where many honeycomb unit core parts are formed. Therefore, unlike a normal scrubber (a jet scrubber, a venturi scrubber, or a spray tower), the exhaust gas hardly crosses and collides with the surface of the treatment water fiercely, but only flows as being calmly in contact with and along the surface. Therefore, mutual mixture does not occur. Thus, of exhaust gas or EGR gas components, SOₓ having high affinity with water is dissolved into its treatment water, but PM without affinity with water is hardly dissolved into treatment water. This treatment water contains SOₓ, but does not contain PM. With this, discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided. Furthermore, scrubber-through operation is possible sometimes.

Note that many exhaust gas flow channels each having a micro section formed in the honeycomb unit core part 12-1 are preferably skewed in a direction slightly downward with respect to the flowing-down direction of the exhaust gas or the EGR gas, a lateral direction, or a diagonally lower direction obtained by combining these direction, because the length of the exhaust gas flow channels having micro sections is increased and the contact area and contact time are increased.

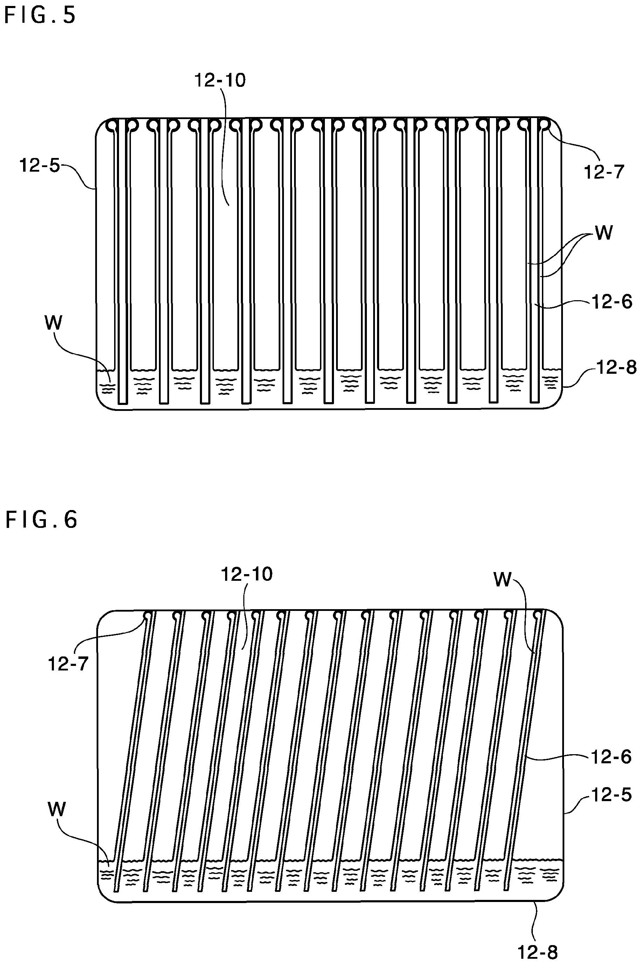

In the PM-free scrubber depicted in Figure 5, in a scrubber housing 12-5 provided to an exhaust gas or EGR gas passage, many flat-plate-shaped treatment plates 12-6 made of a thin-plate material made of austenitic stainless steel, such as SUS316L, or a mesh-plate material made of stainless steel are disposed as retaining a narrow space perpendicular to an up-and-down direction and substantially parallel to the flow of the gas. At an upper end of each treatment plate 12-6, a treatment water supply nozzle 12-7 is provided so as to wet the entire surfaces of a wall of each treatment plate. At a lower end of each treatment plate, a tank unit 12-8 is provided. With a circulation pump (not depicted) driven by a piping and a motor, treatment water (wash water) W is circulated to flow down the entire front and rear surfaces of the wall of the treatment plates 12-6, thereby always wetting the treatment plates. 12-10 denotes an exhaust gas flow channel. The exhaust gas flows in at a flow speed equal to or slower than 7 m/sec in a direction (horizontal direction) substantially orthogonal to a downward flow of the treatment water W on the wall surfaces on both front and rear sides of each treatment plate 12-6, and flows in the exhaust gas flow channels 12-10.

Since the exhaust gas and EGR gas treated by this PM-free scrubber only smoothly flows in contact with and along a portion near the surface of water flowing down the wall surfaces of the always-wet treatment plates 12-6, unlike a normal scrubber, the exhaust gas hardly crosses or collides with the surface of the treatment water fiercely, but only flows as being calmly in contact with and along the surface. Therefore, mutual mixture does not occur. Thus, of exhaust gas or EGR gas components, SOₓ as gas having a large diffusion coefficient and high affinity with water is dissolved into its treatment water, but PM having a large particle diameter and a small diffusion coefficient and without affinity with water is hardly dissolved into treatment water. This treatment water contains SOₓ, but hardly contains PM. With this, discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided. Furthermore, scrubber-through operation is possible sometimes.

Note that the surface shape of the treatment plate 12-6 is not restricted to a flat plate shape, and any of a corrugated plate (not depicted) with waveforms molded in a direction in which the treatment water flows down, a corrugated plate (not depicted) with waveforms molded in a direction in which the exhaust gas or EGR gas flows, a corrugated plate (not depicted) with waveforms molded in a direction crossing the direction in which the treatment water flows down, and an embossed treatment plate (not depicted) with asperities in both of the direction in which the treatment water flows down and the direction in which the exhaust gas/EGR gas flows can be selected for use. In these treatment plates, unlike a normal scrubber, the exhaust gas hardly crosses and collides with the surface of the treatment water fiercely, but only calmly flows along and in contact with the surface. Therefore, mutual mixture does not occur.

In the PM-free scrubber depicted in Figure 6, in a scrubber housing 12-5, many flat-plate-shaped treatment plates 12-6 are disposed as being tilted not in a vertical direction but an up-and-down direction and retaining a narrow space substantially in parallel to the flow of the gas. At an upper end on an upper surface side of the tilted wall surface of each treatment plate 12-6, a treatment water supply nozzle 12-7 is provided so as to wet the entire upper surfaces of each treatment plate. At a lower end of each treatment plate, a tank unit 12-8 is provided. With a circulation pump (not depicted) driven by a piping and a motor, treatment water (wash water) W is circulated to flow down the entire upper surfaces of the tilted treatment plates 12-6, thereby always wetting the treatment plates. 12-10 denotes an exhaust gas flow channel. The exhaust gas flows in at a flow speed equal to or slower than 7 m/sec in a direction (horizontal direction) substantially orthogonal to a downward flow of the treatment water W on the entire upper surface of each treatment plate 12-6, and flows in the exhaust gas flow channels 12-10. Note that the tilt angle is not particularly restrictive but 5° to 20° from the normal is preferable.

Since the exhaust gas and EGR gas treated by this PM-free scrubber only smoothly flows along a portion near the surface of water flowing down the surfaces on the upper side of the always-wet treatment plates 12-6, unlike a normal scrubber, the exhaust gas hardly crosses or collides with the surface of the treatment water fiercely, but only calmly flows along and in contact with the surface. Therefore, mutual mixture does not occur. Thus, of exhaust gas or EGR gas components, SOₓ as gas having a large diffusion coefficient and high affinity with water is dissolved into its treatment water, but PM having a large particle diameter and a small diffusion coefficient and not having affinity with water is hardly dissolved into treatment water. Also, the treatment plates 12-6 are tilted in the up-and-down direction and, at the upper end on the upper surface side of the tilted wall surface of each treatment plate 12-6, the treatment water supply nozzle 12-7 is provided only on the upper surface side to wet the entire upper surface of each treatment plate. Therefore, even if the ship rolls, it is difficult to cause PM to cross or collide with the treatment water with a splash of the treatment water. This treatment water contains SOₓ, but hardly contains PM. With this, discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided. Furthermore, scrubber-through operation is possible sometimes.

With the treatment plates 12-6 provided as being tilted in the up-and-down direction, even if the ship rolls to cause slight rolling in a flowing-out direction of a treatment water flow flowing out from the treatment water supply nozzle 12-7, the entire surface on the upper surface side of the treatment plates 12-6 can be reliably wet. Also, the surface shape of the treatment plate 12-6 is not restricted to a flat plate shape, and any of a corrugated plate (not depicted) with waveforms molded in a direction in which the treatment water flows down, a corrugated plate (not depicted) with waveforms molded in a direction in which the exhaust gas or EGR gas flows, a corrugated plate (not depicted) with waveforms molded in a direction crossing the direction in which the treatment water flows down, and an embossed treatment plate (not depicted) with asperities in both of the direction in which the treatment water flows down and the direction in which the exhaust gas/EGR gas flows can be selected for use. In these treatment plates, unlike a normal scrubber, the exhaust gas hardly crosses and collides with the surface of the treatment water fiercely, but only calmly flows along and in contact with the surface. Therefore, mutual mixture does not occur.

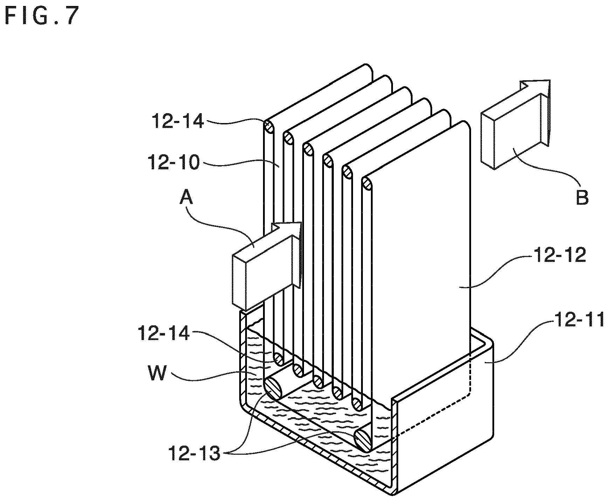

The PM-free scrubber depicted in Figure 7 is configured to have, in a scrubber housing (not depicted) provided to an exhaust gas or EGR gas passage, an endless belt 12-12 with fiber absorbency substantially vertically disposed in a serpentine shape (meandering shape) between driving rolls 12-13 provided to a lower portion in a treatment water tank 12-11 and driven rolls 12-14 provided on both upper and lower parts while the exhaust gas flow channels 12-10 are ensured, and cause treatment water W to flow down by a circulation pump driven by a piping and a motor (any of these is not depicted) by a supply nozzle from straight below the driven rolls 12-14 provided on the upper part relative to both front and rear surfaces of the endless belt 12-12, thereby always wetting the entire front and rear surfaces. The water supply nozzle or the like may be omitted by providing the driven rolls 12-14 installed below under the water surface in the treatment water tank 12-11. In the drawing, an arrow A denotes exhaust gas or EGR gas, which flows in the exhaust gas flow channels 12-10 at a flow speed equal to or slower than 7 m/sec in a direction (horizontal direction) substantially orthogonal to the endless belt 12-12 vertically provided. An arrow B denotes exhaust gas or EGR gas with S components removed therefrom while PM almost remains, which flows out the from exhaust gas flow channels 12-10 substantially orthogonally to the endless belt 12-12.

Also in the case of this PM-free scrubber, unlike a normal scrubber, the exhaust gas hardly crosses or collides with the surface of the treatment water fiercely, but only calmly flows along and in contact with a portion near the water surface of the surface of the endless belt 12-12 of the exhaust gas flow channels 12-10. Therefore, mutual mixture does not occur. Thus, of exhaust gas or EGR gas components, SOₓ as gas having a large diffusion coefficient high affinity with water is dissolved into its treatment water, but PM having a large particle diameter and a large diffusion coefficient and without affinity with water is hardly dissolved into treatment water. This treatment water contains SOₓ, but hardly contains PM. With this, discharge of treatment water to the ocean is possible even during sailing in and outside special areas. In particular, processing of discharging treatment water on board is markedly facilitated, control of the treatment device is simplified to decrease the size of the device, the layout ability is enhanced, and an inexpensive facility can be provided. Furthermore, scrubber-through operation is possible sometimes.

Also, as another type having a structure similar to that of the above PM-free scrubber depicted in Figure 7, in place of the endless belt 12-12 with fiber absorbency, there is a type which adopts an endless belt made of a thin-plate or foil-shaped material made of austenitic stainless steel, such as SUS316L, a thing obtained by boring fine through holes in a thin plate or foil from which treatment water is permeable to their surface, a net material made of an austenitic stainless steel obtained by weaving fine lines where the net is wet with spreading water by capillary action, or the like (drawing is omitted). It goes without saying that, also in the PM-free scrubber adopting this endless belt made of a net material made of austenitic stainless steel, such as SUS316L, or the like, it is possible to obtain operations and effects similar to those of that adopting the endless belt 12-12 with fiber absorbency.

### Examples

Next, the present invention is described in more detail using examples.

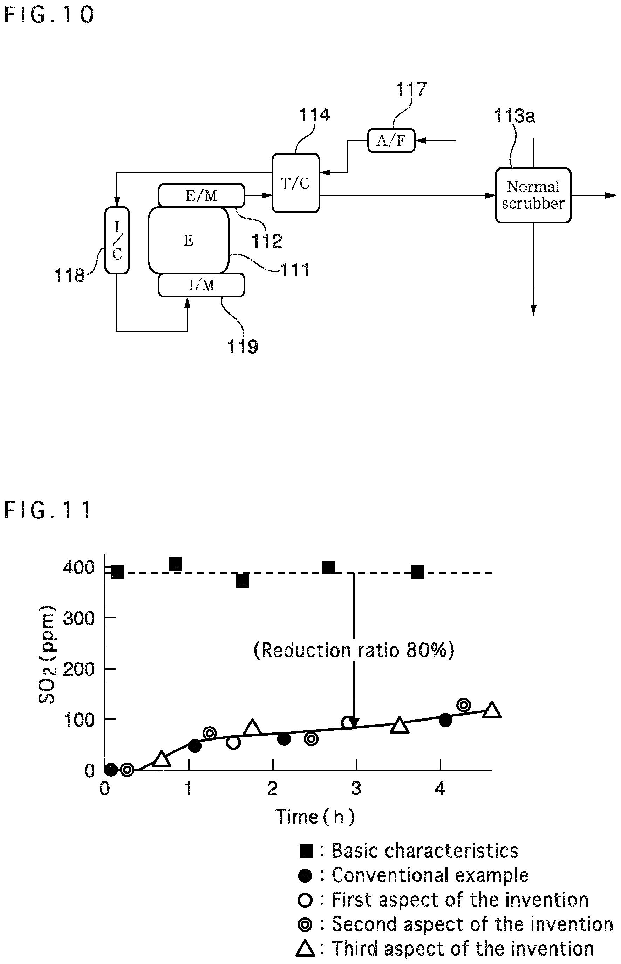

To confirm the effects of the present invention, the following experiment was performed on a marine diesel engine with conditions depicted in Table 1, and various exhaust gas characteristics and characteristics of scrubber treatment water of each example and a conventional example are described below. Basic characteristics are resulted from the case in which a device, depicted in Figure 9, not comprising an exhaust gas purification equipment was used, and a conventional example is resulted from the case in which an exhaust gas purification equipment for a diesel engine, depicted in Figure 10, configured by providing a jet-scrubber-type normal scrubber to the basic structure of Figure 9. Also, the first aspect of the invention is resulted from the case in which the device of the first example depicted in Figure 1 was used, the second aspect of the invention is resulted from the case in which the device of the second example depicted in Figure 2 was used, and the third aspect of the invention is resulted from the case in which the device of the third example depicted in Figure 3 was used.

In the present example corresponding to the first aspect, in the above device of the first example depicted in Figure 1, that is, the exhaust gas purification equipment configured to have a PM-free scrubber 3, which dissolves SOₓ as gas in exhaust gas into its treatment water but hardly dissolves or removes PM into or from its treatment water since an exhaust gas smoothly flows along near a surface of a water thin-film layer made of treatment water flowing down along each of wall surfaces constituting the scrubber without fierce collision of the exhaust gas against the surface of the treatment water, disposed downstream of an exhaust pipe downstream from an exhaust manifold (E/M) 2, make discharge via a muffler (not depicted) disposed downstream therefrom, and cause outside air to be taken to an intake manifold (I/M) 5 of the engine via an air filter (A/F) 4, the concentrations of PM and SO₂ in the exhaust gas and n-hexane extraction values in the treatment water of the PM-free scrubber 3 were each measured at a position upstream from the PM-free scrubber 3.

Here, sulfur dioxides as gas having a large diffusion coefficient on the order of 1.5 × 10⁻⁵ (m²/s) has high solubility in water and seawater, and technology of absorbing sulfur dioxides by a scrubber has been established. That is, by maintaining and managing scrubber treatment water by caustic soda (sodium hydroxide) or the like as alkaline on the order of pH = 12 for use, a sulfur dioxide removal rate of 95% or more can be achieved. A main object of the present example is to reduce fouling due to PM in scrubber treatment water of the present exhaust gas purification equipment, the PM having a large particle diameter on the order of 0.01 to 0.5 µm and an extremely small diffusion coefficient by the order of three to six digits to the order of 10⁻⁸ to 10⁻¹¹ (m²/s) and demonstrate that the waste water treatment process on scrubber treatment water can be simplified. Therefore, in the present examples, tap water was used as scrubber treatment water, and tests were conducted without pH management of caustic soda supply or the like even the scrubber treatment water exhibits acidity due to absorption of sulfur dioxides. Measurement results of the first to third aspects of the present invention and the conventional example regarding sulfur dioxide (SO₂) are collectively depicted in FIG. 11.

Also, in measurement of PM concentrations in the device of the first example depicted in Figure 1, a PM concentration of 72 mg/Nm³ at a measurement location upstream from the PM-free scrubber 3 was hardly changed, 69 mg/Nm³, downstream from the PM-free scrubber 3.

In the present example corresponding to the second aspect, the above device of the second example depicted in Figure 2 is configured as follows. That is, the device is configured to have a PM-free scrubber 3, which dissolves SOₓ in the exhaust gas into its treatment water but hardly dissolves or removes PM since an exhaust gas smoothly flows along near a surface of a water thin-film layer made of treatment water flowing down along each of wall surfaces constituting the scrubber without fierce collision of the exhaust gas against the surface of the treatment water, provided to an exhaust pipe downstream from an exhaust manifold 2, and further have a branching part provided to an exhaust pipe to a muffler (not depicted) downstream therefrom to connect an EGR piping which diverts EGR gas, and cause the diverted EGR gas to be recirculated to an intake pipe from an intake manifold 5 or an air filter 4 while the diverted EGR gas is subjected to flow-rate control by an EGR valve 7.

Therefore, in the device of the second aspect, in the exhaust gas purification equipment configured such that the exhaust gas is treated by the PM-free scrubber 3 which dissolves SOₓ in the exhaust gas into its treatment water but hardly dissolves or removes PM in and from the treatment water and the branched EGR gas is recirculated to the intake pipe directly or via the air filter, as with the first aspect, PM and SO₂ at a position upstream from the PM-free scrubber, the concentrations of SO₂ and NOₓ downstream of the PM-free scrubber 3, and transparency situations in the scrubber treatment water of the PM-free scrubber 3 were each measured and observed.

In the present example corresponding to the third aspect, in the above device of the third example depicted in Figure 3, that is, the structure is such that a turbocharger 8 is attached downstream from an exhaust manifold 2; a PM-free scrubber (main scrubber) 3, which dissolves SOₓ in the exhaust gas into its treatment water but hardly dissolves or removes PM since an exhaust gas smoothly flows along near a surface of a water thin-film layer made of treatment water flowing down along each of wall surfaces constituting the scrubber without fierce collision of the exhaust gas against the surface of the treatment water, is provided to an exhaust pipe downstream from a turbine wheel (not depicted) of the turbocharger 8; a branching part 6 is further provided to an exhaust pipe downstream therefrom to connect an EGR piping which causes part of the exhaust gas to branch as EGR gas to the branching part 5; a PM-free scrubber (sub-scrubber) 9, which dissolves SOₓ in the exhaust gas into its treatment water but hardly dissolves or removes PM since an exhaust gas smoothly flows along near a surface of a water thin-film layer made of treatment water flowing down along each of wall surfaces constituting the scrubber without fierce collision of the exhaust gas against the surface of the treatment water, a blower (B/W) 10 which increases pressure of the EGR gas for supply and pumping, and an EGR valve 7 are disposed in this order to the EGR piping, and cause recirculation to an intake pipe before an intercooler 11 or recirculation upstream from a compressor wheel (not depicted) of the turbocharger 8, while the EGR gas is subjected to flow-rate control by an EGR valve 7. That is, the equipment of the present example is configured to first purify the overall amount of the exhaust gas after a turbine wheel (not depicted) of the turbocharger 8 is accelerated by the PM-free scrubber (main scrubber) 3 which hardly dissolves or removes PM, then further treat only the EGR gas diverted from the overall amount of the exhaust gas by the PM-free scrubber (sub-scrubber) 9 which hardly dissolves or removes PM, and then perform supply and pumping by the blower (B/W) 10 to cause the accurate amount of the EGR gas to be recirculated to the intake pipe before the intercooler 11 or upstream from a compressor wheel (not depicted) of the turbocharger 8.

Therefore, in the device of the third aspect, in the exhaust gas purification equipment configured such that the exhaust gas is first treated by the PM-free scrubber (main scrubber) 3 which hardly dissolves or removes PM, EGR gas branched from the treated exhaust gas is further treated again at the PM-free scrubber (sub-scrubber) 9 which hardly dissolves or removes PM, and the extremely-cleaned EGR gas is recirculated, NOₓ and SO₂ at the exhaust pipe downstream from the turbocharger 8 and upstream from the PM-free scrubber (main scrubber) 3, NOₓ and SO₂ downstream from the PM-free scrubber (sub-scrubber) 9 of the EGR piping and upstream from the blower 10, and transparency situations in the treatment water of the PM-free scrubber 9 were each measured and observed.

### Basic Characteristics

In the device not comprising an exhaust gas purification equipment as depicted in Figure 9, each concentration value of PM, SO₂, and NOₓ in exhaust gas was measured at the exhaust pipe downstream from the turbocharger 114 of the diesel engine.

### Conventional Example

In the present conventional example, in the exhaust gas purification equipment for a diesel engine depicted in Figure 10, that is, in an exhaust gas purification equipment configured such that exhaust gas is subjected to washing process by a normal scrubber 113a called a packed bed type, which is a packed tower type (not depicted) with a structure in which water is sprayed from an upper portion of a packed bed described in Table 1 downstream from the turbocharger 114, concentration values of PM, SO₂, and NOₓ in the exhaust gas downstream from the turbocharger 114 of the exhaust pipe at an upstream position of the normal scrubber 113a and PM, SO₂, and NOₓ at a downstream position of the normal scrubber 113a, and transparency situations in the treatment water of the normal scrubber 113a were each measured and observed.

**[Table 1]**

| |
|---|
| -Engine |
| Stroke: 4-stroke type |
| Number of cylinders: 3 |
| Bore stroke: 130 mm × 160 mm |
| Turbocharger and Intercooler: Equipped |
| Output: 100 PS × 1200 rpm |
| EGR rate: 10%, 20%, 25% |
| Fuel: Fuel Oil of Grade A + Sulfur Addition (Total percentage by mass of Sulfur Content: 2.1) |
| Load factor: 50% |
| Exhaust gas of 200 Nm³/Hr diverted from the exhaust pipe is treated |
| -Normal scrubber: |
| Type: packed bed type (packed tower which sprays water from an upper portion of a packed bed) |
| Manufacturer: Sanki Seisakusho Co., Ltd. |
| Model: S-40 model |
| Average gas flow speed: 0.35 m/sec |
| Water amount: 20 L |
| Water flow speed: 35 L/min |
| Treatment time: 5 hours |
| -PM-free scrubber |
| Type: water-retaining honeycomb type (product name: Honeycomb Washer) |
| Honeycomb core manufacturer: Nichias Corporation |
| Honeycomb size; 250 mm in length × 250 mm in width × 100 mm in depth × 2 layers |
| Average gas flow speed: 0.9 m/sec |
| Treatment water: tap water (without pH adjustment by caustic soda or the like) |
| Water amount: 20 L |
| Water flow speed: 35 L/min |
| Treatment time: 5 hours |

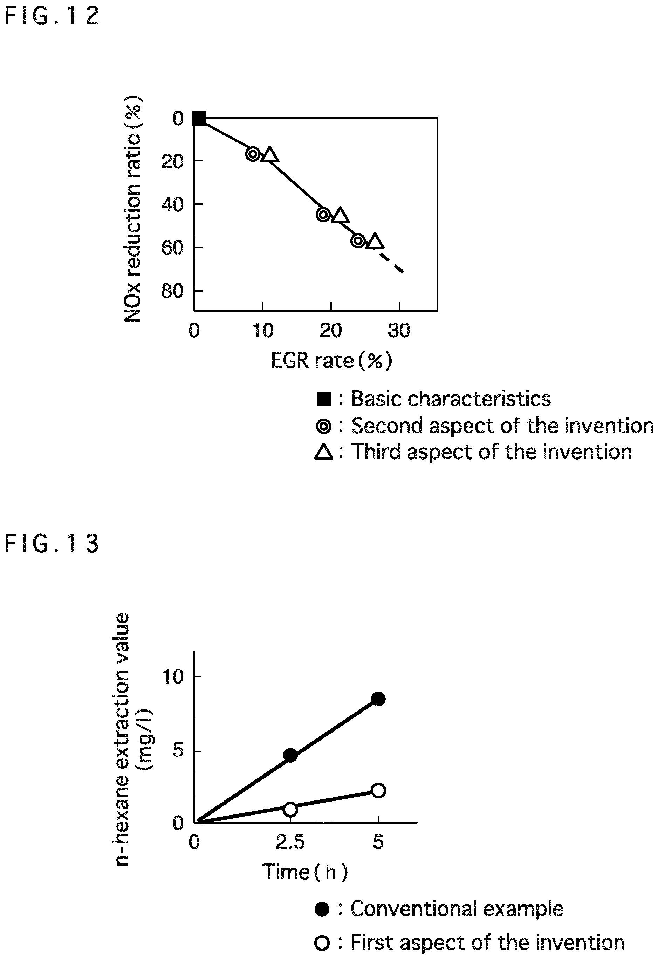

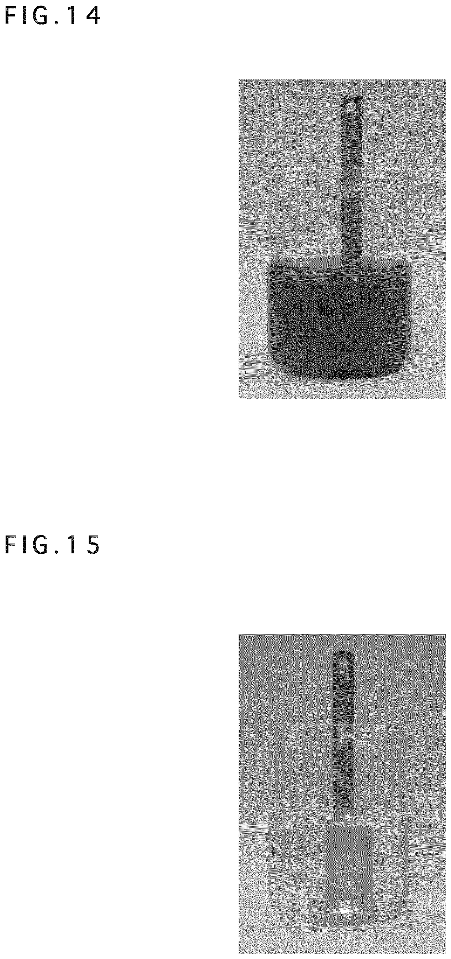

As evident from the examples described above, the following items have been revealed.
(1). In the technology with the basic characteristics, since an exhaust gas purification equipment is not equipped at all, PM, SO₂, NOₓ are not reduced, as a matter of course. Note herein that concentration statuses of SO₂ is depicted in Figure 11 and concentration statuses of NOₓ is depicted in Figure 12, each with a concentration in the basic characteristic as a reference (100%).
(2). In the conventional example, as with the first aspect of the present invention, a PM concentration of 72 mg/Nm³ in PM measurement at a position before the PM-free scrubber was substantially reduced by the normal scrubber. However, since EGR is not performed, NOₓ is not reduced. Also, since a commercially-available normal scrubber using tap water without pH adjustment with caustic soda or the like is equipped, SO₂ is reduced as depicted in Figure 11. However, the scrubber treatment water (wash water) contains not only SOₓ but also PM, and therefore complete removal of components adversely affecting the environment or ecosystem cannot be expected. Note that n-hexane values in the scrubber treatment water at 2.5-hour and 5-hour operations are depicted in Figure 13 and comparison in transparency of the scrubber treatment water at 5-hour operation is depicted in Figure 14 and Figure 15. The conventionally scrubber treatment water whose transparency is shown in Figure 14 is remarkably polluted by PM and, for drain process for scrubber treatment water, it is easy to image that a large number of processes and a sophisticated facility are required.
(3). In the first aspect of the invention, in the exhaust gas, a PM concentration of 72 mg/Nm³ in PM measurement at a position before the PM-free scrubber was hardly changed, 69 mg/Nm³, downstream from the PM-free scrubber 3. Also, since EGR is not performed, NOₓ is not reduced. However, by equipping a PM-free scrubber which dissolves SOₓ in the exhaust gas into its treatment water but hardly dissolves PM, SOₓ with the exhaust gas is significantly reduced as depicted in Figure 11. Also, since the scrubber treatment water hardly contains PM, it can be found that n-hexane extraction values in the scrubber treatment water at 2.5-hour and 5-hour operations are extremely small as depicted in Figure 13, transparency of the scrubber treatment water at 5-hour operation is clear as depicted in Figure 15, and the problem of drain process of the PM-free scrubber can be solved.
(4). In the second aspect of the invention, in the exhaust gas, a PM concentration of 72 mg/Nm³ in PM measurement at a position before the PM-free scrubber was hardly changed, 69 mg/Nm³, downstream from the PM-free scrubber 3. Furthermore, since EGR is performed, NOₓ in the exhaust gas can be significantly reduced by increasing an EGR ratio as depicted in Figure 12, and SOₓ in the exhaust gas is also significantly reduced as depicted in Figure 11. While PM is not reduced, NOₓ can be reduced. Not only that, since the EGR gas also is let go through the PM-free scrubber which dissolves SOₓ in the EGR gas into its treatment water but hardly dissolves PM, the inclusion of SOₓ threatening engine reliability is significantly decreased. Furthermore, since the treatment water of the PM-free scrubber hardly contains PM, the problem of scrubber drain process can be solved similarly to the first aspect.
(5). In the third aspect of the invention, in the exhaust gas, a PM concentration of 72 mg/Nm³ in PM measurement at a position before the PM-free scrubber was hardly changed, 69 mg/Nm³, downstream from the PM-free scrubber (main scrubber) 3. NOₓ in the exhaust gas is reduced similarly to the second aspect, as depicted in Figure 13. Since the EGR piping is provided further with the PM-free-scrubber (sub-scrubber) 9 which dissolves SOx into its treatment water but hardly dissolves PM, SO₂ in the EGR gas is decreased more than the first aspect, and the inclusion of SOx threatening engine reliability is eliminated. Furthermore, since the scrubber is a PM-free scrubber which dissolves SOx into its treatment water but hardly dissolves PM, the treatment water hardly contains PM, and the problem of scrubber drain process can be solved similarly to the first and second aspects of the invention.

Note that the structure of the exhaust gas purification equipment for a marine diesel engine using low-quality fuel such as fuel oil containing high-concentration sulfur components as fuel of the present invention is not restricted to that of the above equipments of the first to third examples, and it goes without saying that the present invention includes all of those configured by variously changing arrangements and combinations of various devices and facilities such as the EGR cooler, the PM-free scrubber, and the supercharger.

Also, while the exhaust gas purification equipment for a marine diesel engine has been described herein, it goes without saying that the present invention can also be applied to exhaust gas purification equipments for diesel engines for purposes other than marines, such as for electric generators and large-scale construction equipment.

### Reference Signs List

- 1: diesel engine
- 2: exhaust manifold
- 3: PM-free scrubber (main scrubber)
- 4: air filter
- 5: intake manifold
- 6: branching part
- 7: EGR valve
- 8: turbocharger
- 9: PM-free scrubber (sub-scrubber)
- 10: blower
- 11: intercooler
- 12-1: honeycomb unit core part
- 12-2: water supply unit
- 12-2-1: water spray tank
- 12-2-2: nozzle aperture
- 12-3: under tray
- 12-4,: 12-11 treatment water tank
- 12-5: scrubber housing
- 12-6: treatment plate
- 12-7: treatment water supply nozzle
- 12-8: tank unit
- 12-10: exhaust gas flow channel
- 12-12: endless belt
- 12-13: driving roll
- 12-14: driven roll
- 21: parallel plate
- 22: treatment water
- 23: sulfur ion
- 24: PM
- 25: SO₂
- 26: gas flow channel
- W: treatment water
- M: motor
- P: pump

## Claims

1. An exhaust gas purification equipment for a marine diesel engine (1) using low-quality fuel such as fuel oil containing high-concentration sulfur components, the exhaust gas purification equipment comprising a scrubber (3) disposed to an exhaust pipe continued to an exhaust manifold (2) of the engine, **characterized in that**
the scrubber (3) removes no PM (24) using a difference in diffusion speed between gas and particles by a smooth flow of an exhaust gas along near a surface of a water thin-film layer made of treatment water (22) flowing down along each of wall surfaces constituting the scrubber (3) without fierce collision of the exhaust gas against the surface of the treatment water (22).

2. An exhaust gas purification equipment for a marine diesel engine (1) using low-quality fuel such as fuel oil containing high-concentration sulfur components according to claim 1, the exhaust gas purification equipment further comprising: a branching part (6) for causing part of the exhaust gas to branch as EGR gas, provided to an exhaust pipe on a downstream side of the scrubber (3) so as to cause the EGR gas to be recirculated to intake air of the engine via an EGR piping continued to the branching part (6).

3. The exhaust gas purification equipment for the marine diesel engine (1) using the low-quality fuel such as fuel oil containing high-concentration sulfur components according to claim 2, the exhaust gas purification equipment comprising another scrubber (9) disposed to the EGR piping, wherein the other scrubber (9) removes no PM (24) using a difference in diffusion speed between gas and particles by a smooth flow of an exhaust gas along near a surface of a water thin-film layer made of treatment water (22) flowing down along each of wall surfaces constituting the scrubber (9) without fierce collision of the exhaust gas against the surface of the treatment water (22).

4. The exhaust gas purification equipment for the marine diesel engine (1) using the low-quality fuel such as fuel oil containing high-concentration sulfur components according to any one of claims 1 to 3, wherein the scrubber (3, 9) that removes no PM (24) using the difference in diffusion speed between gas and particles has: a core of a honeycomb structure arranged perpendicularly to the exhaust pipe or the EGR piping, the honeycomb structure being formed of alternately-multilayered wave plates and flat plates made of a porous ceramic material with excellent water absorbency and with glass fiber as a framework; a water supply unit (12-2) provided on an upper portion of the core over a nearly entire length of the core so as to always wet a surface of the core and arranged so that the exhaust gas or the EGR gas flows in and out in a direction substantially orthogonal to the core and passes inside the core having many tunnel-shaped gas flow channels (26) with micro sections of the honeycomb core; and a tray provided on a lower portion of the core over a nearly entire length of the core, the tray receiving treatment water (22) obtained by purifying the exhaust gas.

5. The exhaust gas purification equipment for the marine diesel engine (1) using low-quality fuel such as fuel oil containing high-concentration sulfur components according to any one of claims 1 to 3, wherein the scrubber (3, 9) that removes no PM (24) using the difference in diffusion speed between gas and particles has: treatment water (22) supply nozzles (12-7) provided on an upper part of the scrubber and a lower tank provided on a lower part of the scrubber in the exhaust pipe or the EGR piping; and a plurality of flat-plate-shaped and/or wave-plate-shaped treatment plates (12-6) arranged between the treatment water (22) supply nozzles (12-7) and the lower tank to be perpendicular or diagonal to an up-and-down direction, the treatment water (22) supply nozzles (12-7) being provided on both sides of each of the treatment plates (12-6) when the treatment plates (12-6) is perpendicularly arranged or the treatment water (22) supply nozzles (12-7) being each provided on an upper surface side of the treatment plates (12-6) when the treatment plates (12-6) is diagonally arranged, for supply of treatment water (22) to always wet the surface and to flow the exhaust gas or the EGR gas in and out in a direction substantially orthogonal to a direction of the arrangement of the treatment plates (12-6).

6. The exhaust gas purification equipment for a marine diesel engine (1) using low-quality fuel such as fuel oil containing high-concentration sulfur components according to any one of claims 1 to 3, wherein the scrubber (3, 9) that removes no PM (24) using the difference in diffusion speed between gas and particles has: a plurality of lower rolls disposed on a lower portion of the exhaust pipe or the EGR piping under a water surface of the tray; an endless belt (12-12) disposed in a serpentine shape between the lower rolls and a plurality of upper rolls corresponding to the lower rolls; and many wet movable wall surfaces vertically formed in an exhaust gas or EGR gas flow channel (26) by driving at least one of each of the rolls to flow the exhaust gas or the EGR gas in and out in a direction substantially orthogonal to a direction of formation of the movable wall surfaces.

## Patentansprüche

1. Abgasreinigungsvorrichtung für einen Dieselmotor für die Schifffahrt (1) verwendend Kraftstoff niedriger Qualität, wie etwa Heizöl, das hochkonzentrierte Schwefelbestandteile enthält, die Abgasreinigungsvorrichtung umfassend einen Abscheider (3), der an einem Abgasrohr angeordnet ist, das weiter zu einem Abgassammler (2) des Motors führt, **dadurch gekennzeichnet, dass**
der Abscheider (3) keine PM (24) entfernt, unter Verwendung einer Differenz zwischen der Diffusionsgeschwindigkeit von Gas und Partikeln durch einen ruhigen Strom eines Abgases entlang einer Fläche einer Wasser-Dünnfilmschicht aus Behandlungswasser (22), das über jede der Wandflächen strömt, aus denen der Abscheider (3) besteht, ohne starke Kollision des Abgases mit der Oberfläche des Behandlungswassers (22).

2. Abgasreinigungsvorrichtung für einen Dieselmotor für die Schifffahrt (1) verwendend Kraftstoff niedriger Qualität, wie etwa Heizöl, das hochkonzentrierte Schwefelbestandteile enthält, nach Anspruch 1, wobei die Abgasreinigungsvorrichtung weiter umfasst:
ein Abzweigungsteil (6), um einen Teil des Abgases als EGR-Gas abzweigen zu lassen, vorgesehen an einem Abgasrohr an einer stromabwärtigen Seite des Abscheiders (3), sodass das EGR-Gas über eine EGR-Rohrleitung, die an das Abzweigungsteil (6) weiterführt, in die Zufuhrluft des Motors zurückgeleitet wird.

3. Abgasreinigungsvorrichtung für den Dieselmotor für die Schifffahrt (1) verwendend Kraftstoff niedriger Qualität, wie etwa Heizöl, das hochkonzentrierte Schwefelbestandteile enthält, nach Anspruch 2, wobei die Abgasreinigungsvorrichtung einen weiteren Abscheider (9) umfasst, der an der EGR-Rohrleitung angeordnet ist,
wobei der andere Abscheider (9) kein PM (24) entfernt, unter Verwendung einer Differenz zwischen der Diffusionsgeschwindigkeit von Gas und Partikeln durch einen ruhigen Strom eines Abgases entlang einer Fläche einer Wasser-Dünnfilmschicht aus Behandlungswasser (22), das über jede der Wandflächen strömt, aus denen der Abscheider (3) besteht, ohne starke Kollision des Abgases mit der Oberfläche des Behandlungswassers (22).

4. Abgasreinigungsvorrichtung für den Dieselmotor für die Schifffahrt (1) verwendend Kraftstoff niedriger Qualität, wie etwa Heizöl, das hochkonzentrierte Schwefelbestandteile enthält, nach einem der Ansprüche 1 bis 3, wobei der Abscheider (3, 9), der unter Verwendung der Differenz der Diffusionsgeschwindigkeit von Gas und Partikeln kein PM (24) entfernt, aufweist: einen Kern mit einer Wabenstruktur, der rechtwinklig zu dem Abgasrohr oder der EGR-Verrohrung angeordnet ist, wobei die Wabenstruktur aus abwechselnd mehrlagigen Wellenplatten und flachen Platten gebildet ist, die aus einem porösen keramischen Material mit einer hervorragenden Wasserabsorption und Glasfaser als Rahmen bestehen; eine Wasserzufuhreinheit (12-2), die an einem oberen Teil des Kerns über einer fast vollständigen Länge des Kerns angeordnet ist, um eine Oberfläche des Kerns immer zu benetzen und so angeordnet ist, dass das Abgas oder das EGA-Gas in einer Richtung ein- und ausströmt, die im Wesentlichen orthogonal zu dem Kern verläuft und in den Kern mit zahlreichen tunnelförmigen Gasflusskanälen (26) mit Mikroschliffen des Wabenkerns eintritt; und eine Wanne, die an einem Anteil des Kerns über einer fast vollständigen Länge des Kerns bereitgestellt ist, wobei die Wanne das Behandlungswasser (22) aufnimmt, das durch Reinigung des Abgases erhalten wird.

5. Abgasreinigungsvorrichtung für den Dieselmotor für die Schifffahrt (1) verwendend Kraftstoff niedriger Qualität, wie etwa Heizöl, das hochkonzentrierte Schwefelbestandteile enthält, nach einem der Ansprüche 1 bis 3, wobei der Abscheider (3, 9), der unter Verwendung der Differenz der Diffusionsgeschwindigkeit von Gas und Partikeln kein PM (24) entfernt, aufweist: Zufuhrdüsen (12-7) für das Behandlungswasser (22), die an einem oberen Teil des Abscheiders bereitgestellt sind, und einen unteren Tank, der an einem unteren Teil des Schrubbers in dem Abgasrohr oder der EGR-Rohrleitung bereitgestellt ist; und mehrere flachrohrförmige und/oder wellenplattenförmige Behandlungsplatten (12-6), die zwischen den Zufuhrdüsen (12-7) für das Behandlungswasser (22) angeordnet sind, wobei der untere Tank rechtwinklig oder diagonal zu einer Auf-Ab-Richtung stehen soll, wobei die Zufuhrdüsen (12-7) für das Behandlungswasser (22) . an beiden Seiten jeder der Behandlungsplatten (12-6) bereitgestellt sind, wenn die Behandlungsplatten (12-6) rechtwinklig angeordnet ist oder die Zufuhrdüsen (12-7) für das Behandlungswasser (22) jeweils an einer Seite der oberen Fläche der Behandlungsplatten (12-6) bereitgestellt sind, wenn die Behandlungsplatten (12-6) diagonal angeordnet ist, um Behandlungswasser (22) zuzuführen, um die Fläche immer zu benetzen, und um das Abgas oder EGR-Gas in einer Richtung ein- und ausströmen zu lassen, die im Wesentlichen orthogonal zu einer Richtung der Anordnung der Behandlungsplatten (12-6) verläuft.

6. Abgasreinigungsvorrichtung für den Dieselmotor für die Schifffahrt (1) verwendend Kraftstoff niedriger Qualität, wie etwa Heizöl, das hochkonzentrierte Schwefelbestandteile enthält, nach einem der Ansprüche 1 bis 3, wobei der Abscheider (3, 9), der unter Verwendung der Differenz der Diffusionsgeschwindigkeit von Gas und Partikeln kein PM (24) entfernt, aufweist: mehrere untere Rollen, die an einem unteren Anteil des Abgasrohrs oder der EGR-Rohrleitung unter einer Wasseroberfläche der Wanne angeordnet sind; einen Endlosgurt (12-12), der in einer Serpentinenform zwischen den unteren Rollen und mehreren oberen Rollen angeordnet ist, die den unteren Rollen entsprechen; und zahlreiche nasse bewegliche Wandflächen, die vertikal in einem Abgas- oder EGR-Gasflusskanal (26) gebildet sind, indem mindestens eine der Rollen angetrieben wird, um das Abgas oder EGR-Gas in einer Richtung, die im Wesentlichen orthogonal zu einer Richtung der Bildung der beweglichen Wandflächen verläuft, ein- und ausströmen zu lassen.

## Revendications

1. Équipement de purification de gaz d'échappement pour un moteur diesel marin (1) utilisant un carburant de basse qualité tel que du mazout contenant des composants sulfurés de haute concentration, l'équipement de purification de gaz d'échappement comprenant un épurateur (3) monté sur un tuyau d'échappement prolongé d'un collecteur d'échappement (2) du moteur, **caractérisé en ce que**
l'épurateur (3) n'élimine pas de PM (24) en utilisant une différence de vitesse de diffusion entre gaz et particules par un flux régulier d'un gaz d'échappement le long et à proximité d'une surface d'une couche de couche mince aqueuse préparée par une eau de traitement (22) s'écoulant le long de chacune des surfaces de paroi constituant l'épurateur (3) sans une intense collision du gaz d'échappement contre la surface de l'eau de traitement (22).

2. Équipement de purification de gaz d'échappement pour un moteur diesel marin (1) utilisant un carburant de basse qualité tel que du mazout contenant des composants sulfurés de haute concentration selon la revendication 1, l'équipement de purification de gaz d'échappement comprenant en outre :
une partie ramifiée (6) permettant de faire en sorte qu'une partie du gaz d'échappement se ramifie en tant que gaz EGR, montée sur un tuyau d'échappement sur un côté en aval de l'épurateur (3) de façon à provoquer la recirculation du gaz EGR en air expiré du moteur par l'intermédiaire d'une canalisation EGR prolongée de la partie ramifiée (6).

3. Équipement de purification de gaz d'échappement pour un moteur diesel marin (1) utilisant un carburant de basse qualité tel que du mazout contenant des composants sulfurés de haute concentration selon la revendication 2, l'équipement de purification de gaz d'échappement comprenant un autre épurateur (9) monté sur la canalisation EGR,
dans lequel l'autre épurateur (9) n'élimine pas de PM (24) en utilisant une différence de vitesse de diffusion entre gaz et particules par un flux régulier d'un gaz d'échappement le long et à proximité d'une surface d'une couche de couche mince aqueuse préparée par une eau de traitement (22) s'écoulant le long de chacune des surfaces de paroi constituant l'épurateur (9) sans une intense collision du gaz d'échappement contre la surface de l'eau de traitement (22).

4. Équipement de purification de gaz d'échappement pour un moteur diesel marin (1) utilisant un carburant de basse qualité tel que du mazout contenant des composants sulfurés de haute concentration selon l'une quelconque des revendications 1 à 3, dans lequel l'épurateur (3, 9) qui n'élimine pas de PM (24) en utilisant une différence de vitesse de diffusion entre gaz et particules possède : un noyau d'une structure en nid d'abeille agencé de manière perpendiculaire au tuyau d'échappement ou à la canalisation EGR, la structure en nid d'abeille étant formée de plaques ondulées disposées en multicouches alternées et de plaques plates fabriquées à partir d'un matériau à base de céramique poreux possédant une excellente absorbance de l'eau et avec de la fibre de verre en tant que cadre ; une unité d'approvisionnement en eau (12-2) montée sur une partie supérieure du noyau sur environ une entière longueur du noyau de façon à constamment humidifier une surface du noyau et agencée de telle façon que le tuyau d'échappement ou le gaz EGR s'écoule vers l'intérieur et vers l'extérieur dans une direction essentiellement orthogonale au noyau et passe à l'intérieur du noyau présentant de nombreux canaux d'écoulement de gaz en forme de tunnel (26) avec des micro-sections du noyau en nid d'abeille ; et un plateau monté sur une partie inférieure du noyau sur environ une entière longueur du noyau, le plateau recevant l'eau de traitement (22) obtenue par la purification du gaz d'échappement.

5. Équipement de purification de gaz d'échappement pour un moteur diesel marin (1) utilisant un carburant de basse qualité tel que du mazout contenant des composants sulfurés de haute concentration selon l'une quelconque des revendications 1 à 3, dans lequel l'épurateur (3, 9) qui n'élimine pas de PM (24) en utilisant une différence de vitesse de diffusion entre gaz et particules possède : des buses d'approvisionnement (12-7) en eau de traitement (22) montées sur une partie supérieure de l'épurateur et un réservoir inférieur monté sur une partie inférieure de l'épurateur dans le tuyau d'échappement ou dans la canalisation EGR ; et une pluralité de plaques de traitement de forme plate et/ou de forme ondulée (12-6) agencées entre les buses d'approvisionnement (12-7) en eau de traitement (22) et le réservoir inférieur de façon à être perpendiculaires ou diagonales à une direction de haut en bas, les buses d'approvisionnement (12-7) en eau de traitement (22) étant montées sur les deux côtés de chacune des plaques de traitement (12-6) lorsque les plaques de traitement (12-6) sont agencées de manière perpendiculaire ou les buses d'approvisionnement (12-7) en eau de traitement (22) étant chacune montée sur un côté de surface supérieure des plaques de traitement (12-6) lorsque les plaques de traitement (12-6) sont agencées de manière diagonale, pour l'approvisionnement en eau de traitement (22) de façon à constamment humidifier la surface et écouler le gaz d'échappement ou le gaz EGR vers l'intérieur et vers l'extérieur dans une direction essentiellement orthogonale à une direction de l'arrangement des plaques de traitement (12-6).

6. Équipement de purification de gaz d'échappement pour un moteur diesel marin (1) utilisant un carburant de basse qualité tel que du mazout contenant des composants sulfurés de haute concentration selon l'une quelconque des revendications 1 à 3, dans lequel l'épurateur (3, 9) qui n'élimine pas de PM (24) en utilisant une différence de vitesse de diffusion entre gaz et particules possède : une pluralité de rouleaux inférieurs montés sur une partie inférieure du tuyau d'échappement ou de la canalisation EGR sous une surface d'eau du plateau ; un tapis sans fin (12-12) monté en forme de serpentin entre les rouleaux inférieurs et une pluralité de rouleaux supérieurs correspondant aux rouleaux inférieurs ; et de nombreuses surfaces humides de paroi mobiles formées de manière verticale dans un gaz d'échappement ou un canal d'écoulement de gaz EGR (26) en entraînant au moins un de chacun des rouleaux à écouler le gaz d'échappement ou le gaz EGR vers l'intérieur et vers l'extérieur dans une direction essentiellement orthogonale à une direction de formation des surfaces de paroi mobiles.
